# EUROPÄISCHE PATENTSCHRIFT

(11) **EP 4 189 678 B1**
(45) Veröffentlichungstag und Bekanntmachung des Hinweises auf die Patenterteilung: **24.09.2025**
(21) Anmeldenummer: 21749562.1
(22) Anmeldetag: 22.07.2021
(51) Int. Cl.: G10L 21/0216, H04R 1/40, H04R 3/00, H04R 5/027

(54) **SELBSTBEDIENUNG-TERMINAL UND VERFAHREN**
SELF-SERVICE TERMINAL AND METHOD
BORNE EN LIBRE-SERVICE ET PROCÉDÉ ASSOCIÉ

(30) Priorität: 03.08.2020 DE 102020120426
(43) Veröffentlichungstag der Anmeldung: 07.06.2023
(73) Patentinhaber: Diebold Nixdorf Systems GmbH, 33106 Paderborn (DE)
(72) Erfinder: SCHÄFER, Oliver, 14621 Schönwalde-Glien (DE); PUSCH, Alexander, 10555 Berlin (DE); KNOBLOCH, Alexander, 33100 Paderborn (DE)
(86) Internationale Anmeldenummer: PCT/EP2021/070562
(87) Internationale Veröffentlichungsnummer: WO 2022/028909

(56) Entgegenhaltungen:
- CN-A- 107 507 623
- US-A1- 2003 018 897
- US-A1- 2019 141 445
- US-B1- 10 726 681

## Beschreibung

Verschiedene Ausführungsbeispiele betreffen ein Selbstbedienung-Terminal und ein Verfahren.

Ein Beispiel für ein Selbstbedienung-Terminal ist bekannt aus CN 107 507 623 A.

Im herkömmlichen Einzelhandel bietet ein Selbstbedienung-Registrierterminal dem Kunden die Möglichkeit, die gewünschten Produkte selbst zu scannen (z.B. ohne Unterstützung) oder alternativ sich beim Scannen der Produkte von einem Mitarbeiter unterstützen zu lassen. Ein solches Selbstbedienung-Registrierterminal sorgt für einen alternativen Registrier- und Bezahlvorgang, mehr Anonymität für den Kunden und geringere Personalkosten für den Einzelhandel. Mit einem Selbstbedienung-Registrierterminal scannt nicht notwendigerweise ein Kassierer, sondern jeder Kunde die Barcodes der zu kaufenden Produkte selbst.

Je nach Einsatzort und Einsatzzweck, bzw. nach Technologiestufe, wird an solchen Selbstbedienung-Registrierterminals auch eine Spracherkennung eingesetzt, um dem Kunden die Bedienung zu erleichtern. Dabei können Nebengeräusche, sogenannte Störgeräusche, welche der Spracheingabe überlagert sind, die korrekte Spracherkennung erschweren. Gerade im öffentlichen Bereich, in welchem solche Selbstbedienung-Registrierterminals Anwendung finden, sind häufig viele Menschen und Schallquellen zugegen, so dass die Anzahl von Störgeräuschen und der Hintergrundpegel sehr groß sein können.

Dies kann eine Beeinträchtigung der zur Spracherkennung verwendeten Algorithmen zur Folge haben aufgrund der Vermischung von Spracheingabe (d.h. das Nutzsignal bzw. die Äußerung des Bedieners) mit diese überlagernden Sprachsignalen (d.h. Störsignale, beispielsweise von benachbarten oder dahinter stehenden Personen ausgehend). Die Beeinträchtigung hat zur Folge, dass beim Erkennungsversuch entweder kein gültiger Treffer erzielt wird (z.B. aufgrund von zeitlicher Signalüberlagerung mit dem Störer und somit einer zu starken Verfremdung des zu untersuchenden Lautes oder Wortes) oder ein fehlerhafter Treffer erzielt wird (z.B. bedingt dadurch, dass das dominante Störgeräusch einem Treffer in der Vergleichs-Datenbank stark genug ähnelt oder gleicht).

Dem wird herkömmlicherweise mittels eines sogenannten Strahl-Formungsmechanismus (auch als Beamforming-Mechanismus bezeichnet) entgegengewirkt, der eine elektrische und/oder akustische Ausrichtung des Mikrofons bewirkt.

Gemäß verschiedenen Ausführungsformen wurde anschaulich erkannt, dass herkömmliche Beamforming-Mechanismen es nur erlauben, Signale zu den Seiten hin gezielt "abzuschirmen" bzw. "einzugrenzen" bzw. außerhalb der Richtungswirkung liegende Signale zu unterdrücken. Jedoch bleiben die Signale von hintereinander liegenden Schallquellen - z.B. aus derselben Richtung wie auch das Nutzsignal kommend - deutlich hörbar oder erhalten oder es kann sogar noch ein Verstärkungseffekt (wie beispielsweise beim Richtmikrofon) eintreten.

Genauer gesagt wurde erkannt, dass ein herkömmlicher Beamforming-Mechanismus nur eine Richtung vorgibt, entlang welcher die Signale verstärkt werden. Ein Beamforming-Mechanismus beruht beispielsweise darauf, dass ein Mikrofon fokussiert wird, indem eine Zeitverschiebung der vom jeweiligen Mikrofon erfassten Schallsignale erfolgt. Die Zeitverschiebung korrespondiert zu der Laufzeit, welche der Schall zu dem Mikrofon benötigt. Allerdings wird dadurch der Ort der Schallentstehung nur dann eindeutig eingegrenzt, wenn dieser auf einem invarianten Objekt liegt, auf welches das Mikrofon fokussiert wird. Ist der genaue Ort der Entstehung des Schalls hingegen unbekannt, kann eine solche Laufzeitkompensation hingegen nicht allen Freiheitsgraden genügen. Hinzu kommt, dass im Dreidimensionalen alle Orte der Schallentstehung mit einheitlicher Laufzeit auf einer sphärischen Fläche um das Mikrofon herum liegen.

Sind der genaue Ort der Entstehung des Schalls und damit dessen Laufzeit unbekannt, kann das Mikrofon nicht ohne weiteres fokussiert werden. Soll der Ort der Entstehung des Schalls geortet werden, kann dies wiederum nur dann erfolgen, wenn ein unverkennbares Schallsignal vorliegt, welches bekannt ist. Dies ist allerdings auf eine Spracherkennung nicht anwendbar, da die zu erkennende Spracheingabe variiert und damit ein eigener Freiheitsgrad ist. Ferner handelt es sich auch bei den Störgeräuschen oft um Gesprochenes, so dass dieses ohne weiteres auch nicht von der eigentlichen Spracheingabe zu unterscheiden ist. Weitere Herausforderungen sind daher, dass sowohl das Nutz-Sprachsignal als auch Störsignale zeitlich willkürlich und unabhängig voneinander auftreten oder sich ähneln können. Ferner sind Anzahl sowie die Entfernung der Störquelle(n) unbekannt und können zudem jeweils variieren.

Die Erfindung ist in den beigefügten Ansprüchen dargelegt.

Gemäß verschiedenen Ausführungsformen werden ein Selbstbedienung-Terminal und ein Verfahren bereitgestellt, welche anschaulich den Empfang in die Tiefe begrenzen, beispielsweise in einem Korridor mit minimaler und maximaler Grenze. Damit wird erreicht, dass Stör-Bestandteile der erfassten Geräusche relativ zu Nutz-Bestandteilen der erfassten Geräusche abgeschwächt werden, wenn ein Ursprung der Nutz-Bestandteile (auch als Nutzquelle bezeichnet) zwischen dem Selbstbedienung-Terminal und einem Ursprung der Stör-Bestandteile (auch als Störquelle bezeichnet) liegt. Dieser Mechanismus kann beispielsweise alternativ oder zusätzlich zu einem herkömmlichen Beamforming-Mechanismus, der ein seitliches Richten (z.B. horizontal und vertikal) beim Schall-Empfang bereitstellt, verwendet werden.

Anschaulich werden mehr Randbedingungen als beim herkömmlichen Beamforming-Mechanismus verwendet, um ein entfernungsabhängiges Filtern der erfassten Geräusche (allgemeiner als erfasstes akustisches Signal oder kurz als erfasstes Signal bezeichnet) bereitzustellen. Das entfernungsabhängige Filtern kann alternativ oder zusätzlich zu dem richtungsabhängigen Filtern des Beamforming-Mechanismus erfolgen. Beispiele für zusätzliche Randbedingungen können aufweisen, dass die Nutzquelle und Störquelle hintereinander und/oder auf derselben Höhe angeordnet sind (bei Personen), dass die Nutzquelle frontal und/oder sehr nach/vor dem Selbstbedienung-Terminal (auch als SB-Terminal bezeichnet) steht, dass der Schalldruck und die Laufzeit sich in ihrer Abhängigkeit von der Entfernung voneinander unterscheiden.

Es zeigen
- Figur 1: ein SB-Terminal gemäß verschiedenen Ausführungsformen in einem schematischen Aufbaudiagramm;
- Figur 2: ein SB-Terminal gemäß verschiedenen Ausführungsformen in einem schematischen Kommunikationsdiagramm;
- Figur 3: ein SB-Terminal gemäß verschiedenen Ausführungsformen in einer schematischen Seitenansicht;
- Figur 4: und Figur 5 jeweils das SB-Terminal in einem Verfahren gemäß verschiedenen Ausführungsformen in einer schematischen Seitenansicht oder Querschnittsansicht;
- Figur 6A und Figur 6B: jeweils das SB-Terminal in dem Verfahren gemäß verschiedenen Ausführungsformen in schematischen Perspektivansichten;
- Figur 7A und Figur 7B: jeweils das SB-Terminal in dem Verfahren gemäß verschiedenen Ausführungsformen in schematischen Detailansichten;
- Figur 8A und Figur 8B: jeweils das Verfahren gemäß verschiedenen Ausführungsformen in verschiedenen schematischen Diagrammen;
- Figur 9A bis Figur 9C: jeweils das SB-Terminal gemäß verschiedenen Ausführungsformen in einer schematischen Seitenansicht;
- Figur 10 und Figur 11: jeweils das Verfahren gemäß verschiedenen Ausführungsformen in einem schematischen Ablaufdiagramm;
- Figur 12A bis Figur 12C: jeweils ein SB-Terminal gemäß verschiedenen Ausführungsformen in einer schematischen Seitenansicht; und
- Figur 13: das Verfahren gemäß verschiedenen Ausführungsformen in einem schematischen Ablaufdiagramm.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer elektrisch leitfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Der Begriff "Steuervorrichtung" kann als jede Art einer Logik implementierenden Entität verstanden werden, die beispielsweise eine Verschaltung und/oder einen Prozessor aufweisen kann, welche Software ausführen kann, die in einem Speichermedium, in einer Firmware oder in einer Kombination davon gespeichert ist, und darauf basierend Anweisungen ausgeben kann. Die Steuervorrichtung kann beispielsweise mittels Codesegmenten (z.B. Software) konfiguriert sein, um den Betrieb eines Systems (z.B. seines Arbeitspunkts), z.B. einer Maschine oder einer Anlage, z.B. deren Komponenten, zu steuern.

Der Begriff "Prozessor" kann als jede Art von Entität verstanden werden, die die Verarbeitung von Daten oder Signalen erlaubt. Die Daten oder Signale können beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die nachstehend ausführlicher beschrieben werden, kann auch als Prozessor oder Logikschaltung verstanden werden. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden. Der Prozessor kann daher eingerichtet sein, eines der hierin beschriebenen Verfahren oder dessen Komponenten zur Informationsverarbeitung durchzuführen.

Gemäß verschiedenen Ausführungsformen kann ein Datenspeicher (allgemeiner auch als Speichermedium bezeichnet) ein nichtflüchtiger Datenspeicher sein. Der Datenspeicher kann beispielsweise eine Festplatte und/oder zumindest einen Halbleiterspeicher (wie z.B. Nur-Lese-Speicher, Direktzugriffsspeicher und/oder Flash-Speicher) aufweisen oder daraus gebildet sein. Der Nur-Lese-Speicher kann beispielsweise ein löschbarer programmierbarer Nur-Lese-Speicher (kann auch als EPROM bezeichnet werden) sein. Der Direktzugriffsspeicher kann ein nichtflüchtiger Direktzugriffsspeicher (kann auch als NVRAM -"non-volatile random access memory" bezeichnet werden) sein.

Gemäß verschiedenen Ausführungsformen kann ein Selbstbedienung-Registrierterminal (auch als SB-Registrierterminal bezeichnet) eingerichtet sein, die Produkte, die ein Kunde erwerben will, zu registrieren, z.B. mittels Scannens der Produkte an einem Scanner (z.B. einem Barcodescanner). Ferner kann das SB-Registrierterminal ein (z.B. digitales) Kassensystem aufweisen (dann auch als Selbstbedienungskasse bezeichnet), welches eingerichtet ist, einen Bezahlprozess durchzuführen. Der Bezahlprozess kann beispielsweise aufweisen, dass der Kunde die zu erwerbenden Produkte auch bezahlt. Das Kassensystem kann zumindest eines von Folgendem aufweisen: einen Bildschirm (z.B. einen berührungsempfindlichen Bildschirm), einen Drucker (z.B. zum Ausdrucken einer Rechnung und/oder eines Etiketts), eine (z.B. programmierbare) Kassentastatur (kann auch Teil des berührungsempfindlichen Bildschirms sein), eine Bezahlvorrichtung. Die Bezahlvorrichtung kann beispielsweise eine Zahlungsmittel-Lesevorrichtung aufweisen zum Auslesen eines Zahlungsmittels (z.B. Bargeld oder eine Debitkarte). Die Bezahlvorrichtung kann alternativ oder zusätzlich eingerichtet sein, Bargeld anzunehmen.

Die Zahlungsmittel-Lesevorrichtung kann beispielsweise ein Elektronisch-Zahlungsmittel-Lesevorrichtung (kann auch als EC-Lesevorrichtung bezeichnet werden, "EC" - electronic cash, z.B. zum Auslesen einer Debitkarte und/oder einer Kreditkarte) sein. Das Kassensystem und der Scanner können auf derselben Seite (z.B. einer Säule) des SB-Registrierterminals angeordnet sein, so dass diese von einer Position aus bedient werden können.

Im Folgenden wird sich auf Produkte (z.B. Waren, kann auch als Artikel bezeichnet werden) als Objekte bezogen. Das Beschriebene kann in Analogie auch für andere Objekte gelten, wie beispielsweise eine Hand.

Im Folgenden wird sich auf die sogenannte Laufzeit bzw. eine Differenz zwischen Laufzeiten (auch als Laufzeitdifferenz bezeichnet) bezogen. Die Laufzeit t ist die Zeit, welche der Schall von dem Ursprung des Schalls (d.h. dem Ort der Schallquelle) zu einem Ort der Erfassung des Schalls benötigt, z.B. zu einem Ort des Sensors. Der Schall legt dabei den Abstand s (d.h. die Strecke s) von der Schallquelle zu dem Ort der Erfassung zurück. Dabei ist für den n-ten Ort, an welchem der Schall erfasst wird, die Laufzeit tₙ = s_{n/}c_{S}, wobei c_{S} die Schallgeschwindigkeit ist und tₙ die Laufzeit bzw. sₙ den Abstand für den n-ten Ort bezeichnen. Die Laufzeit lässt sich so durch Multiplikation mit der Schallgeschwindigkeit in den Abstand zur Schallquelle umrechnen.

Verschiedene Orte (z.B. n=1 und n=2) der Erfassung können daher eine Laufzeitdifferenz Δt = (t₂ - t₁) aufweisen, welche sich aufgrund ihres Unterschieds im Abstand von der Schallquelle ergibt. Je größer der Abstand ist, desto größer ist die Laufzeit. Auf Grundlage der Laufzeitdifferenz kann der Abstand von der Schallquelle ermittelt oder zumindest eingegrenzt werden. Sind t₂ und t₁ bekannt, liegen die infrage kommenden Orte der Schallquelle im Zweidimensionalen am Schnittpunkt zweier Kreise, deren Mittelpunkte am Ort der Sensoren angeordnet sind und deren Radius zu den Laufzeiten t₂ und t₁ korrespondiert. Im Dreidimensionalen liegen entsprechende Sphären vor, die sich entlang eines Kreises schneiden. Sind weder t₂ noch t₁, sondern nur deren Differenz Δt bekannt, lässt sich der Abstand von infrage kommenden Orten der Schallquelle nicht mehr eingrenzen, da sich die Bedingung Δt = konstant bis ins Unendliche erfüllen lässt.

Das für die Laufzeit Beschriebene kann in Analogie für den Schalldruck p (auch als Signalpegel bezeichnet) bzw. die Schalldruckdifferenz Δp = (p₂ - p₁) gelten. Der Schalldruck p repräsentiert die Amplitude des Schalls, welcher am Ort der Erfassung des Schalls vorliegt, z.B. am Ort des Sensors. Der Schall legt dabei Abstand s (d.h. die Strecke s) der Quelle von dem Ort der Erfassung zurück und verliert dabei an Schalldruck. Dabei ist für den n-ten Ort, an welchem der Schall erfasst wird, der Schalldruck pₙ = pₙ(sₙ²) eine Funktion vom Quadrat des Abstands sₙ. Der Schalldruck p lässt sich so in einen Abstand umrechnen. Als Maß für den Schalldruck kann die Amplitude verwendet werden. Beispielsweise wird der zeitabhängige Schalldruck ausgegeben als zeitabhängiges Messsignal, dessen Amplitude (auch als Signalamplitude oder Signalstärke bezeichnet) den erfassten Schalldruck repräsentiert.

Im Folgenden wird daher unter anderem auf die allgemeinere Signalamplitude bzw. deren Differenz (auch als Amplitudendifferenz bezeichnet) Bezug genommen. Die Signalamplitude bezeichnet bezüglich des Schalls dessen zeitabhängigen Schalldruck, bezüglich eines elektrischen Signals dessen zeitabhängige elektrische Größe (z.B. Spannung und/oder Stromstärke). Als Audiosignal kann ein elektrisches Signal verstanden werden, das akustische Informationen transportiert. Als Schall kann ein mechanisches Signal verstanden werden, das akustische Informationen transportiert.

Im Folgenden wird auf ein Selbstbedienung-Terminal (auch als SB-Terminal bezeichnet) Bezug genommen, welches eingerichtet ist, ein oder mehr als ein diesem präsentiertes Produkt zu erfassen. Optional kann das Selbstbedienung-Terminal eingerichtet sein, die erfassten Produkte zu registrieren und darauf basierend für die Gesamtheit der registrierten Produkte eine Abrechnungsinformation bereitzustellen (dann auch als SB-Registrierterminal bezeichnet). Das Selbstbedienung-Terminal (auch als SCO-Terminal bezeichnet) muss aber nicht notwendigerweise zum Registrieren und/oder Bereitstellen der Abrechnungsinformation eingerichtet sein. Beispiele für ein weniger komplexes Selbstbedienung-Terminal können aufweisen: eine Produktwiegeterminal, ein Informationsterminal, oder Ähnliches. Das Produktwiegeterminal kann beispielsweise vom Kunden verwendet werden, um ein Produkt zu wiegen und einen Aufkleber zu erhalten, welcher einen Preis angibt, der für das Produkt aufgerufen wird. Das Informationsterminal kann beispielsweise eingerichtet sein, dem Kunden auf Anfrage einen Preis anzuzeigen, der für das Produkt aufgerufen wird. Es versteht sich, dass solche Funktionen auch von einem SB-Registrierterminal implementiert werden können, z.B. einem SB-Kassenterminal.

Gemäß verschiedenen Ausführungsformen kann das Ermitteln eines Sprachmusters erfolgen (auch als Spracherkennung bezeichnet) auf Grundlage eines digitalen Audiosignals. Das Sprachmuster kann anschaulich den Inhalt einer gesprochenen Benutzereingabe (auch als Spracheingabe bezeichnet) repräsentieren. Zur Spracherkennung kann eine entsprechende Mustererkennung verwendet werden, welche beispielsweise gemäß einer vorherrschenden oder vom Benutzer ausgewählten Sprache eingerichtet ist. Zur Spracherkennung kann ein optional analog vorliegendes Audiosignal digitalisiert werden mittels Abtastung des analogen Audiosignals. Ferner kann optional eine Filterung und/oder Transformation des digitalen Audiosignals in den Frequenzraum und ein Ermitteln eines Merkmalsvektors erfolgen. Die Mustererkennung wird dann auf den Merkmalsvektor angewendet. Der Merkmalsvektor weist voneinander abhängige oder unabhängige Merkmale auf, die aus dem digitalen Audiosignal (z.B. Sprachsignal) erzeugt werden. Ein Beispiel eines solchen Merkmals ist das sogenannte Cepstrum und/oder das Frequenzspektrum. Das Cepstrum wird aus dem Frequenzspektrum gewonnen, indem die Fouriertransformierte des logarithmierten Betrags-Spektrums gebildet wird. Damit lassen sich verschiedene Periodizitäten im Spektrum erkennen. Diese Periodizitäten werden im menschlichen Vokaltrakt und durch die Stimmbandanregung erzeugt, welcher sich somit rekonstruieren lässt. Darauf basierend lässt sich der Inhalt der Spracheingabe ermitteln.

Das Sprachmuster kann einem Inhalt der Spracheingabe zugeordnet werden, z.B. indem dieses mit Referenzmustern abgeglichen wird, deren Inhalt bekannt ist. Beispiele zum Inhalt der Spracheingabe können aufweisen: eine Anweisung an das SB-Terminal, Information zu dem Produkt, eine Auswahl zwischen dem Benutzer präsentierten Optionen, eine Antwort auf eine Anfrage und/oder Aufforderung des SB-Terminals. Beispiele für die Anweisung an das SB-Terminal weisen auf, eine Anweisung die Registriersitzung zu starten (Sitzungsstartereignis), eine Anweisung die Registriersitzung zu beenden (Sitzungsendereignis), eine Anweisung zur Annahme eines bestimmten Zahlungsmittels. Beispiele für dem Benutzer präsentierte Optionen weisen auf, ob der Benutzer eine ausgedruckte Rechnung möchte, ob der Benutzer einen weiteren Einkauf vornehmen möchte, ob der Benutzer ein weiteres Produkt erfassen möchte, ob der Benutzer an einem Bonusprogram teilnehmen möchte. Beispiele für Information zu dem Produkt weisen auf: die Art des Produkts, die Anzahl der Produkte, eine Kennung des Produkts, eine Farbe des Produkts. Über die Art des Produkts (z.B. Banane) als Spracheingabe kann der Benutzer beispielsweise mitteilen, welches Produkt er gerade wiegt, so dass die Steuervorrichtung basierend auf der Spracheingabe die Kennung des Produkts ermittelt.

Herkömmlicherweise erfolgt bei der Spracherkennung keine Abschirmung von Schall in die Tiefe, was jedoch für die Anwendung (z.B. zur Sprachbedienung am SCO-Terminal im Einzelhandel) vorteilhaft wäre.

Gemäß verschiedenen Ausführungsformen wird ein Mechanismus der Messung von Laufzeitunterschieden für Signale bereitgestellt, die entsprungen sind von Signalquellen, von denen insbesondere der Startzeitpunkt der Aussendung, z.B. bei Sprachsignalen, unbekannt ist. Dies erleichtert die Unterscheidung der örtlichen Herkunft (auch als Ort des Ursprungs bezeichnet) mehrerer Signale, z.B. die Unterscheidung von gewünschtem und ungewünschtem Sprachsignal. Dies kann alternativ oder zusätzlich zu herkömmlichen Mechanismen zur Lokalisierung von Objekten verwendet werden, bei denen beispielsweise ein definierter Signalimpuls (z.B. Licht oder Schall) ausgesandt und dessen Laufzeit zum Objekt und zum Sender zurück ermittelt wird.

Gemäß verschiedenen Ausführungsformen wird eine versetzte Mikrofonanordnung bereitgestellt, welche beispielsweise abhängig ist von der zu erwartenden Position der gewünschten (Sprach-)Signalquelle. Dadurch wird eine Trennung der gewünschten und ungewünschten Signale voneinander in einfacher und nicht-rechenintensiver Form bereitgestellt, beispielsweise allein durch Addition der empfangenen Signale von mehreren versetzt zueinander angeordneten Mikrophonen, ohne dabei spezielle Signal-Vorverarbeitungen oder Berechnungen durchführen zu müssen.

Herkömmlicherweise werden für die Messung einer Signalherkunftsrichtung durch sogenanntes Beamforming mindestens 3 Mikrofone benötigt. Die Anzahl der nötigen Mikrofone für den hierin beschriebenen Mechanismus können beispielsweise hingegen zwei Mikrofone sein.

Gemäß verschiedenen Ausführungsformen wird die Erkennung von Sprachsignalen im stark geräusch-behafteten Kassenumfeld erleichtert. Dabei ist eine Herausforderung, neben der Richtung auch eine Entfernung der jeweiligen Nutzsignalquelle (Sprecher bzw. Kunde) vor dem SCO-Terminal (mit den Mikrophonen) zu erkennen und von Störquellen zu unterscheiden, um diese voneinander zu trennen und die Störsignale zu unterdrücken. Wenn man davon ausgehen kann, dass der Kunde (Sprecher, d.h. Quelle des Nutzsignals) nahe vor dem SCO-Terminal steht und die Störquelle (weitere störende Sprecher, d.h. Quelle des Störsignals) sich mindestens dahinter befindet, kann über die Ausbreitung der akustischen Wellen (auch als Schall bezeichnet) und der daraus entstehenden Laufzeitdifferenz und/oder Schalldruckdifferenz (messbar über eine Mehrfach-Mikrophon-Anordnung) zwischen Nutzsignal und Störsignal unterschieden werden. Dafür können idealerweise 3 oder mehr aber zumindest 2 in geeigneter Weise zueinander gebrachte Mikrophone verwendet werden.

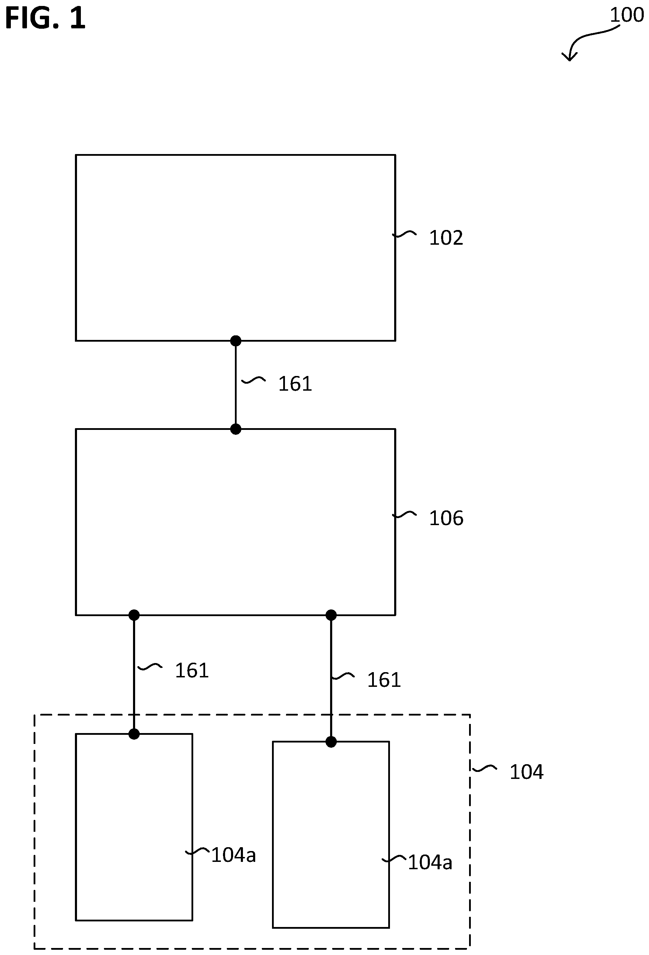

**Fig.1** veranschaulicht ein SB-Terminal 100 gemäß verschiedenen Ausführungsformen in einem schematischen Aufbaudiagramm. Das SB-Terminal 100 kann beispielsweise ein SB-Registrierterminal 100 sein.

Das SB-Terminal 100 kann eine oder mehr als eine Produkterfassungsvorrichtung 102, mehrere (d.h. zwei oder mehr) akustische Sensoren 104a, 104b und eine Steuervorrichtung 106 aufweisen. Die untereinander kommunizierenden Komponenten des SB-Terminals 100 können mit der Steuervorrichtung 106 kommunikativ 161 gekoppelt sein, z.B. mittels eines Feldbus-Kommunikationsnetzwerks 161 oder anderer Signalverbindungen. Somit können die akustischen Sensoren 104a, 104b und die oder jede Produkterfassungsvorrichtung 102 kommunikativ 161 mit der Steuervorrichtung 106 gekoppelt sein.

Die Produkterfassungsvorrichtung 102 kann zum Erfassen einer Eigenschaft eines Produkts (auch als Produkteigenschaft bezeichnet) eingerichtet sein, z.B. einer mechanischen Produkteigenschaft, einer optischen Produkteigenschaft und/oder einer codierten Produkteigenschaft. Die mechanische Produkteigenschaft kann beispielsweise eine Größe, eine Form und/oder ein Gewicht aufweisen. Die optische Produkteigenschaft kann beispielsweise eine Farbe oder ein Muster aufweisen. Die codierte Produkteigenschaft kann beispielsweise eine codierte Kennung und/oder eine codierte Angabe über das Produkt aufweisen.

Die Produkterfassungsvorrichtung 102 kann beispielsweise eine Bilderfassungsvorrichtung zum Erfassen der optischen Eigenschaft aufweisen. Die Bilderfassungsvorrichtung kann eingerichtet sein, der Steuervorrichtung 106 Bilddaten eines Erfassungsbereichs (z.B. im Rohdatenformat oder in einer vorbearbeiteten Version des Rohdatenformats), z.B. pixelbasierte Bilddaten (auch als Rastergrafik bezeichnet), zuzuführen. Die Bilderfassungsvorrichtung 102 kann beispielsweise eine oder mehr als eine Kamera aufweisen.

Die Produkterfassungsvorrichtung 102 kann beispielsweise eine Kennungserfassungsvorrichtung aufweisen. Die Kennungserfassungsvorrichtung kann eingerichtet sein, der Steuervorrichtung 106 eine von ihr erfasste Produktkennung zuzuführen. Die Produktkennung kann beispielsweise einem Produkt oder dessen Typ eindeutig zugeordnet sein. Die Produktkennung kann beispielsweise auf Grundlage eines optischen Merkmals (auch als Kennungsmerkmal bezeichnet) des Produkts, welches erfasst wird, ermittelt werden. Das Kennungsmerkmal (z.B. ein Muster) kann einen maschinenlesbaren Code aufweisen, der die Produktkennung repräsentiert, z.B. einen Binärcode oder Ähnliches. Beispielsweise kann das Kennungsmerkmal einen Barcode oder einen anderen maschinenlesbaren Code aufweisen.

Die Produkterfassungsvorrichtung 102 kann beispielsweise eine Waage zum Erfassen des Gewichts des Produkts aufweisen. Die Waage kann beispielsweise einen oder mehr als einen Gewichtssensor aufweisen, welcher das Gewicht erfasst.

Ein akustischer Sensor 104a, 104b (vereinfacht im Folgenden als Mikrofon bezeichnet) kann beispielsweise einen Schallwandler aufweisen oder daraus gebildet sein. Der Schallwandler kann eingerichtet sein, ein akustisches Signal in ein elektrisches Signal (auch als Audiosignal bezeichnet) umzuwandeln. Der Schallwandler kann beispielsweise ein Druckgradientenmikrofon, ein Druckmikrofon oder Ähnliches aufweisen, aktiv oder passiv sein, induktiv, kapazitiv oder resistiv wandeln.

Die Mikrofone 104a, 104b können Teil einer Benutzerschnittstelle 104 sein, welche mittels der Steuervorrichtung oder separat davon implementiert ist. Mittels der Benutzerschnittstelle 104 kann beispielsweise eine akustische Spracheingabe erfasst werden, z.B. eine Spracheingabe. Die Produkterfassungsvorrichtung 102 und die Benutzerschnittstelle 104 können eine entsprechende Infrastruktur (z.B. Prozessor, Speichermedium und/oder Bussystem aufweisend) oder dergleichen aufweisen, welche eine Messkette implementiert. Die Messkette kann eingerichtet sein, die entsprechenden Sensoren (z.B. Kamera, Scanner, Mikrofon, usw.) anzusteuern, deren Messgröße als Eingangsgröße zu verarbeiten und darauf basierend ein elektrisches Signal als Ausgangsgröße bereitzustellen, z.B. die Produktkennung, ein Audiosignal, einen Gewichtswert, oder Ähnliches.

Jedes der Mikrofone 104a, 104b kann mittels der Messkette eingerichtet sein, von dem Mikrofon erfassten Schall (Eingangsgröße) in eine entsprechende elektrische Ausgangsgröße (auch als Audiosignal bezeichnet) zu überführen. Das Audiosignal kann beispielsweise ein analoges oder digitales Audiosignal sein. Das Audiosignal kann optional vorverarbeitet werden, z.B. abgetastet, gefiltert, sequenziert, normiert, und dergleichen. Das Audiosignal kann ein von dem Sensor erfasstes akustisches Signal (auch als Schall bezeichnet) repräsentieren, z.B. deren Schalldruck oder Schallwechseldruck als Funktion der Zeit (im Folgenden auch als Amplitude bezeichnet). Als Schalldruck werden die Druckschwankungen eines kompressiblen Schallübertragungsmediums (z.B. Luft) bezeichnet, die bei der Ausbreitung von Schall auftreten.

Das digitale Audiosignal kann beispielsweise mittels Abtastung des analogen Audiosignals bereitgestellt sein oder werden. Dazu wird das analoge Audiosignal in eine Aneinanderreihung von skalaren Werten übertragen, wobei die Abtastrate bestimmt, wie viele skalare Werte pro Zeiteinheit erfasst werden. Das Abtasten kann aufweisen, das analoge (kontinuierliche) Audiosignal zu digitalisieren, d.h. in ein digitales Audiosignal zu überführen. Das digitale Audiosignal kann optional als Datei abgespeichert sein oder werden (auch als Audiodaten bezeichnet).

Im Folgenden wird sich auf die Verarbeitung der digitalen Audiosignale bezogen, z.B. mittels eines digitalen Signalprozessors (auch als DSP bezeichnet). Alternativ oder zusätzlich zu den digitalen Audiosignalen kann auch das analoge Audiosignal weiterverarbeitet werden, z.B. mittels einer analogen Schaltung. Das für die digitalen Audiosignale Beschriebene gilt somit in Analogie für analoge Audiosignale. Zur Verarbeitung eines analogen Audiosignals kann auch ein DSP zwischen einen Analog-Digital-Umsetzer und einen Digital-Analog-Umsetzer geschaltet sein.

Mittels der Produkterfassungsvorrichtung 102 kann ein produktweises Ermitteln der einzelnen Produkteigenschaften erfolgen. Der Bereich, von dem aus die Produkterfassungsvorrichtung 102 bedient werden kann, z.B. indem dieser das Produkt präsentiert wird, wird im Folgenden auch als Bedienbereich bezeichnet.

Der (beispielsweise sphärenförmige) Bedienbereich kann aus denjenigen Punkten im Raum gebildet sein, welche einen Abstand von der Produkterfassungsvorrichtung 102 von weniger als einer Bedienreichweite aufweisen. Mit anderen Worten kann der Bedienbereich nahe der Produkterfassungsvorrichtung 102, z.B. unmittelbar vor dieser, angeordnet sein. Die Bedienreichweite kann beispielsweise kleiner sein als ungefähr 5 m (Meter), z.B. als ungefähr 2,5 m, z.B. als ungefähr 1 m. Alternativ oder zusätzlich kann die Produkterfassungsvorrichtung 102 an den Bedienbereich angrenzen oder in diesen hinein erstreckt sein.

Alternativ oder zusätzlich kann der Bedienbereich einen Abstand von einem Untergrund, auf welchem das SB-Terminal 100 angeordnet ist, aufweisen, z.B. von mehr als ungefähr 1 m (z.B. ungefähr 1,5 m) und/oder weniger als ungefähr 3 m (z.B. ungefähr 2,5 m).

Anschaulich kann der Bedienbereich derjenige Bereich sein, in welchem der Kopf eines Benutzers, der (z.B. physisch) mit der Produkterfassungsvorrichtung 102 interagieren will, mit hoher Wahrscheinlichkeit angeordnet ist, so dass der Kopf innerhalb der Bedienreichweite angeordnet ist. Beispielsweise können diese infrage kommenden Positionen für den Kopf aufgrund der Armlänge beschränkt sein.

Das Erfassen der Produkteigenschaften kann aufweisen, dass ein zu erfassendes Produkt der Produkterfassungsvorrichtung 102 präsentiert wird. Das Präsentieren kann beispielsweise aufweisen, dass das zu erfassende Produkt in einer Produkterfassungszone angeordnet wird und dessen Kennungsmerkmal in Richtung der Produkterfassungsvorrichtung 102 ausgerichtet wird. Das Präsentieren kann beispielsweise aufweisen, dass das zu erfassende Produkt auf einer Oberfläche abgelegt wird, welche mittels eines Sensors der Produkterfassungsvorrichtung 102 überwacht wird.

Die Produkterfassungsvorrichtung 102, die Benutzerschnittstelle 104 und die Steuervorrichtung 106 müssen nicht notwendigerweise dedizierte Infrastrukturen aufweisen. Beispielsweise können deren informationsverarbeitende Funktionen auch als Komponenten derselben Schaltung und/oder Software (auch als Anwendung bezeichnet) bereitgestellt werden, die von einem oder mehr als einem Prozessor des SB-Terminals 100 ausgeführt wird. Es können selbstverständlich auch mehrere Anwendungen und/oder mehrere Prozessoren verwendet werden, welche die informationsverarbeitenden Funktionen der Produkterfassungsvorrichtung 102, der Benutzerschnittstelle 104 und der Steuervorrichtung 106 bereitstellen.

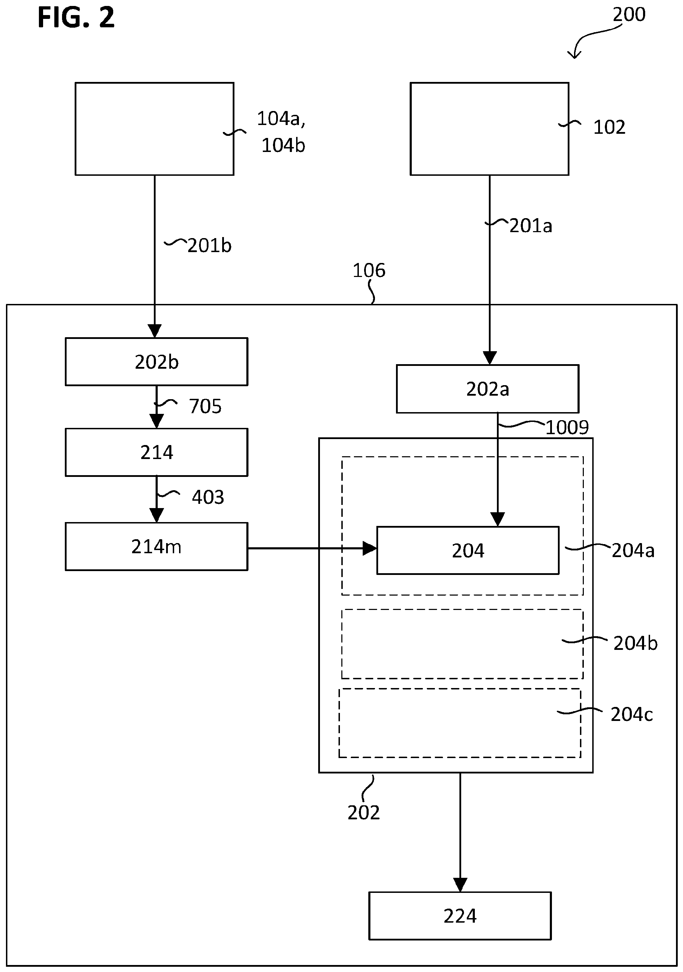

**Fig.2** veranschaulicht ein SB-Terminal 100 gemäß verschiedenen Ausführungsformen 200 in einem schematischen Kommunikationsdiagramm.

Die Produkterfassungsvorrichtung 102 kann eingerichtet sein, der Steuervorrichtung 106 eine erfasste Produkteigenschaft 202a zuzuführen 201a. Ferner können mittels der Mikrofone 104a, 104b Audiosignale 202b bereitgestellt werden. Die Audiosignale 202b können den von den Mikrofonen 104a, 104b erfassten Schall repräsentieren.

Die Steuervorrichtung 106 kann eingerichtet sein zum Ermitteln 1009 von Zahlungsinformationen 204 basierend auf der Produkteigenschaft 201a (auch als Zahlungsinformation-Ermitteln bezeichnet). Die Zahlungsinformationen 204 können anschaulich repräsentieren, welcher Preis für das entsprechende Produkt mit der Produkteigenschaft 201a aufgerufen wird. Beispielsweise kann dazu die erfasste Produkteigenschaft 201a mit einer Datenbank abgeglichen werden.

Beispielsweise kann die Steuervorrichtung 106 eingerichtet sein, eine Registriersitzung 202 zu starten, z.B. in Antwort auf ein ermitteltes Ereignis (auch als Sitzungsstartereignis bezeichnet), welches repräsentiert, dass eine Selbstbedienungsregistrierung erfolgen soll. Beispiele für das Sitzungsstartereignis können aufweisen, dass ein Nutzer vor dem SB-Terminal 100 steht und/oder eine entsprechende Eingabe an diesem vornimmt, dass der Produkterfassungsvorrichtung 102 ein Produkt präsentiert wurde, und/oder dass eine vorherige Registriersitzung beendet wurde.

In ähnlicher Weise kann die Steuervorrichtung 106 eingerichtet sein, die Registriersitzung 202 zu beenden, z.B. in Antwort auf ein ermitteltes Ereignis (auch als Sitzungsendereignis bezeichnet), welches repräsentiert, dass eine Abrechnung der Selbstbedienungsregistrierung erfolgen soll. Beispiele für das Sitzungsendereignis können aufweisen, dass ein Nutzer eine entsprechende Eingabe an dem SB-Terminal 100 vornimmt. Beispiele für das Sitzungsendereignis können aufweisen, dass eine Bankkarte oder ein anderes Zahlungsmittel von dem SB-Terminal 100 erfasst wurde, und/oder dass ein vordefinierter Zeitraum abgelaufen ist, seit dem das letzte Produkt erfasst wurde.

Zum Beenden der Registriersitzung 202 kann die Steuervorrichtung 106 eingerichtet sein, eine Abrechnungsinformation 224 zu ermitteln und mittels einer Anzeigevorrichtung des SB-Terminals 100 anzuzeigen. Die während einer Registriersitzung 202 ermittelten Zahlungsinformationen 204 können beispielsweise aggregiert werden und das Ergebnis des Aggregierens der Abrechnungsinformation 224 hinzugefügt werden. Die Abrechnungsinformation 224 kann anschaulich angeben, welche zu zahlende Summe die registrierten Produkte ergeben. Die Abrechnungsinformation 224 kann optional weitere Informationen aufweisen, wie beispielsweise den Anteil an Steuern, eine Liste der erfassten Produkte, eine Einzelaufstellung der Zahlungsinformationen 204, oder Ähnliches.

Die Steuervorrichtung 106 kann eingerichtet sein, basierend auf den Audiosignalen 202b ein Sprachmuster 214m zu ermitteln 403. Das Sprachmuster 214m kann eine gesprochene Spracheingabe (z.B. Anweisungen oder Informationen zu dem Produkt) repräsentieren. Zum Ermitteln des Sprachmusters 214m können die Audiosignale 202b einander überlagert 705 werden. Ein Ergebnis 214 (auch als Überlagerungssignal 214 bezeichnet) daraus kann dann dem Ermitteln 403 des Sprachmusters 214m zugeführt werden.

Die Steuervorrichtung 106 kann ferner eingerichtet sein, basierend auf dem Sprachmuster 214m die Zahlungsinformation 204 bereitzustellen. Alternativ oder zusätzlich zu der Zahlungsinformation kann auch eine andere Information bereitgestellt werden.

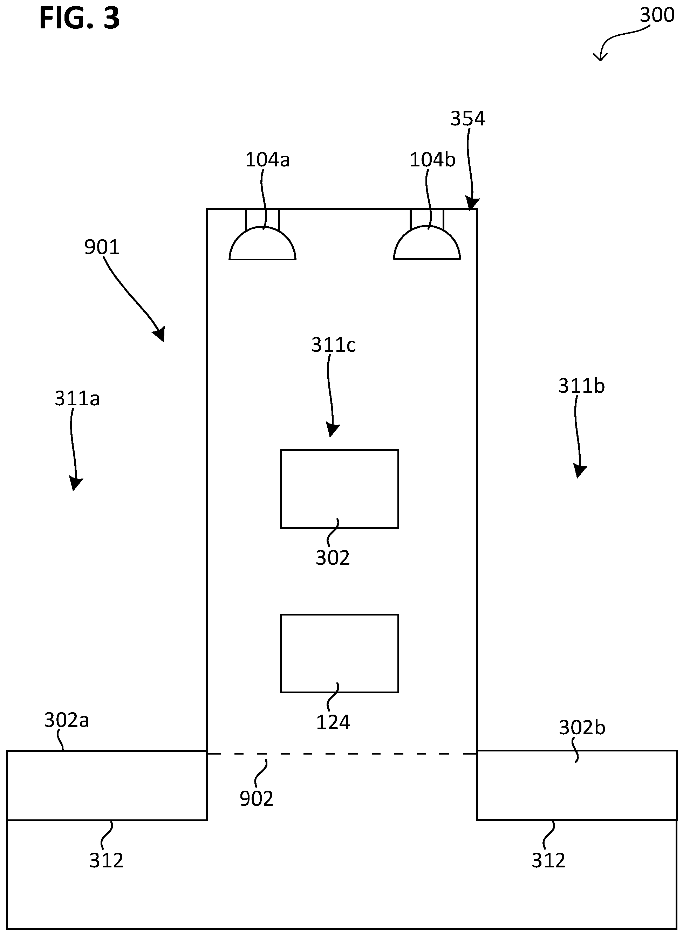

**Fig.3** veranschaulicht ein SB-Terminal 100 gemäß verschiedenen Ausführungsformen 300 in einer schematischen Seitenansicht, z.B. eingerichtet wie die Ausführungsformen 200.

Im Allgemeinen kann das SB-Terminal 100 ein Tragwerk 352 aufweisen, mittels welchem verschiedenen Komponenten des SB-Terminal 100 getragen werden, beispielsweise eine oder mehr als eine Ablagevorrichtung 302a, 302b, die Mikrofone 104a, 104b, die Produkterfassungsvorrichtung 304, die Steuervorrichtung (nicht dargestellt), usw. Das Tragwerk 352 kann beispielsweise ein Gestell und ein daran befestigtes Gehäuse aufweisen, wobei das Gehäuse die sensiblen Komponenten des SB-Terminals 100 einhaust. Das Tragwerk 352 kann beispielsweise eine Basis aufweisen, mit welcher das Tragwerk 352 auf einem Untergrund steht und einen vertikal erstreckten Abschnitt 354 (anschaulich auch als Säule bezeichnet), welcher die erhöht angebrachten Komponenten, z.B. eine Anzeigevorrichtung 124 und/oder die Kennungserfassungsvorrichtung 304, trägt.

Das SB-Terminal 100 kann mehrere Teilbereiche (auch als Zonen bezeichnet) aufweisen. Die mehreren Zonen können beispielsweise eine erste Zone 311a (auch als Eingabezone 311a bezeichnet) aufweisen, in welcher eine erste Ablagevorrichtung 302a des SB-Terminals 100 angeordnet ist. Die mehreren Zonen können beispielsweise eine zweite Zone 311b (auch als Ablagezone 311b bezeichnet) aufweisen, in welcher eine zweite Ablagevorrichtung 302b des SB-Terminals 100 angeordnet ist. Die mehreren Zonen können beispielsweise die Produkterfassungszone als dritte Zone 311c (auch als Scanzone 311c bezeichnet) aufweisen.

Die oder jede Ablagevorrichtung 302b, 302a kann derart eingerichtet sein, dass auf dieser ein oder mehr als ein Produkt abgelegt werden kann. Dazu kann eine Ablagevorrichtung 302b, 302a beispielsweise ein Ablageregal, einen Ablagehaken für Taschen und/oder einen Ablagetisch aufweisen. Optional kann die oder jede Ablagevorrichtung 302b, 302a eine Waage 312 als Produkterfassungsvorrichtung aufweisen, welche eingerichtet ist, ein Gewicht der auf der Ablagevorrichtung abgelegten Produkte zu erfassen.

Optional kann das SB-Terminal 100 eine Informationsausgabevorrichtung 124 aufweisen. Die Informationsausgabevorrichtung 124 kann beispielsweise eingerichtet sein, die von der Steuervorrichtung ausgegebene Information als eine vom Menschen wahrnehmbare (z.B. hörbare oder sichtbare) Information auszugeben, z.B. mittels einer Anzeigevorrichtung. Die Information kann beispielsweise eine Aufforderung und/oder eine Hilfestellung für den Benutzer aufweisen.

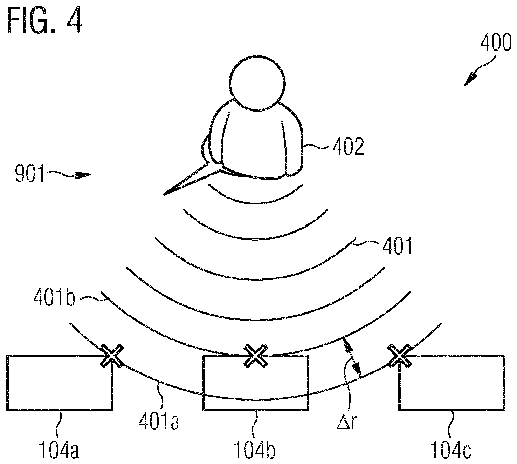

**Fig.4** veranschaulicht das SB-Terminal 100 in einem Verfahren 400 gemäß verschiedenen Ausführungsformen in einer schematischen Seitenansicht oder Querschnittsansicht, wobei das Verfahren 400 beispielsweise mittels der Steuervorrichtung 106 implementiert wird. Das Verfahren 400 wird anhand einer Anzahl von drei Mikrophonen 104a, 104b, 104c beschrieben. Das Beschriebene kann in Analogie zu einer von drei verschiedenen Anzahl von Mikrofonen gelten, zum Beispiel für zwei Mikrofone oder mehr als drei Mikrofone.

Das Verfahren kann aufweisen, eine akustische Benutzereingabe 401 (auch als Spracheingabe bezeichnet) mittels jedes Mikrophons der mehreren Mikrophone 104a, 104b, 104c zu erfassen. Die Spracheingabe kann im Allgemeinen mittels einer akustischen Schwingung übertragen werden, welche sich im Raum ausbreitet (auch als Schallwelle bezeichnet). Die Amplitude A der akustischen Schwingung kann vom Abstand s und von der Zeit t abhängen, so dass A = A(s, t) ist.

Die Spracheingabe kann mittels Schallwellen übertragen werden, welche zu einem Zeitpunkt tₙ auf das n-te Mikrofon treffen, der abhängig ist von dem Abstand sₙ des n-ten Mikrofons zu der Quelle 402 der Spracheingabe. Der sich ausbreitende Schall ist in Fig.4 veranschaulicht als räumliche Verteilung von Schallwellenfronten 401a, 401b (auch als Wellenfront bezeichnet) zum Zeitpunkt t = t₁, zu welchem die Spracheingabe auf das erste Mikrofon 104a trifft. Die Schallwellenfronten 401a, 401b repräsentieren jeweils Flächen r(t = t₁) einheitlichen Schalldrucks im Raum mit dem exemplarischen Abstand Δr = c_{S} · Δt voneinander.

Die Quelle 402 der Spracheingabe kann eine Person sein (auch als Benutzer bezeichnet). Die Quelle 402 der Spracheingabe 401 (auch als Eingabequelle 402 bezeichnet) kann allerdings auch eine synthetische Eingabequelle 402 sein, beispielsweise um den hierin beschriebenen Mechanismus zu kalibrieren, wie später noch genauer beschrieben wird.

Zu dem Zeitpunkt t₂ = t₁ - Δt kann eine erste Wellenfront 401a der akustischen Spracheingabe das mittlere, zweite Mikrophon 104b passiert haben und zeitgleich (d.h. t₁ = t₃) die äußeren Mikrophone 104a, 104c (z.B. links und rechts davon) erreichen. Eine zweite Wellenfront 401b der akustischen Spracheingabe erreicht zu diesem Zeitpunkt t = t₁ das mittlere Mikrophon 104b, weist allerdings noch einen Abstand von den äußeren Mikrophonen 104a, 104b auf, so dass sie diese erst zu einem späteren Zeitpunkt t = t₁ + Δt erreichen wird.

Somit entsteht für jede der Wellenfronten 401a, 401b eine Laufzeitdifferenz Δt, welche anschaulich die Zeitdifferenz zwischen den Zeitpunkten des Auftreffens auf unterschiedliche Mikrophone angibt. Mittels der Laufzeitdifferenz Δt zwischen den Mikrophonen außen und mittig kann ermittelt werden, welche Position die Eingabequelle 402 relativ zu den mehreren Mikrofonen 104a, 104b, 104c aufweist (auch als Laufzeitmechanismus bezeichnet). Beispielsweise kann ermittelt werden, welche Schallquelle (bzw. welcher Sprecher) sich näher an den mehreren Mikrofonen 104a, 104b, 104c oder weiter weg davon befindet. Aufgrund der Symmetrie t₁ = t₃ kann, wie vorstehend beschrieben, das dritte Mikrofon 104c optional weggelassen werden.

In ähnlicher Weise kann ausgenutzt werden, dass eine Wellenfront, je weiter sie sich von ihrer Eingabequelle 402 entfernt, ausdünnt, d.h. in ihrer Amplitude (z.B. dem Schalldruck) verliert. Dadurch kann jede der Wellenfronten 401a, 401b einen größeren Schalldruck auf das mittlere Mikrofon 104b ausüben als auf die äußeren Mikrofone 104a, 104c. Auf Grundlage dieser Differenz in der Amplitude (im Folgenden vereinfacht als Schalldruckdifferenz bezeichnet) kann ebenso die Position der Eingabequelle 402 relativ zu den mehreren Mikrofonen 104a, 104b, 104c (auch als Amplitudenmechanismus bezeichnet) ermittelt werden.

Der Amplitudenmechanismus und der Laufzeitmechanismus können alternativ zu einander oder gemeinsam verwendet werden. Beispielsweise kann nur der Amplitudenmechanismus oder nur der Laufzeitmechanismus verwendet werden.

Beispielsweise kann ermittelt werden, ob die Eingabequelle 402 zentral vor den mehreren Mikrofonen angeordnet ist oder einen zeitlichen Versatz zu diesen aufweist, z.B. über die Laufzeitdifferenz und/oder Schalldruckdifferenz.

Optional können die Mikrofone 104a, 104b 104c auch derart angeordnet sein, dass diese in ihrem Abstand sₙ von der Quelle 402 der Spracheingabe übereinstimmen. Dies erreicht, dass die Mikrofone 104a, 104b 104c auf eine feste Position im Raum "fokussiert" sind (auch als Fokus-Position bezeichnet), welche die Soll-Position einer Schallquelle ist, die konstruktiv verstärkt werden soll. Soll die Soll-Position von der Position einheitlichen Abstands (Fokus-Position) von den Mikrofonen 104a, 104b 104c abweichen, kann diese mittels einer Kalibration berücksichtigt werden und/oder mittels eines Abstandssensors, wie später genauer beschrieben wird.

Die Soll-Position kann im Allgemeinen in dem Bedienbereich 901 angeordnet sein.

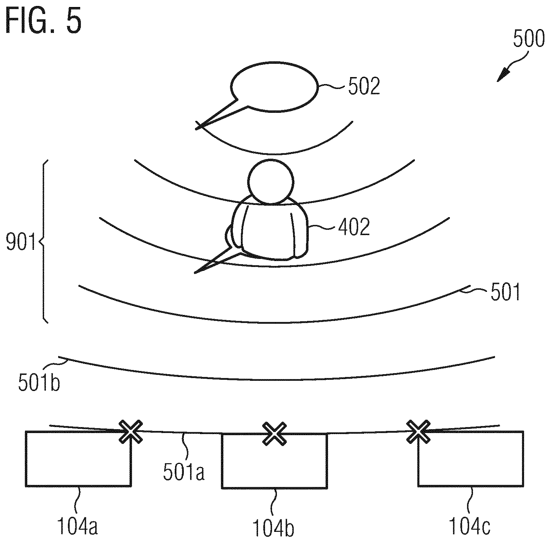

**Fig.5** veranschaulicht das SB-Terminal 100 in dem Verfahren 400 gemäß verschiedenen Ausführungsformen 500 in einer schematischen Seitenansicht oder Querschnittsansicht. Das Verfahren 500 wird anhand einer Anzahl von drei Mikrophonen 104a, 104b, 104c beschrieben. Das Beschriebene kann in Analogie zu einer von drei verschiedenen Anzahl von Mikrofonen gelten, zum Beispiel zwei Mikrofone oder mehr als drei Mikrofone.

Das Verfahren kann aufweisen, ein akustisches Störgeräusch 501 mittels jedes Mikrophons der mehreren Mikrophone 104a, 104b, 104c zu erfassen. Das akustische Störgeräusch 501 kann in Analogie zu der Spracheingabe mittels einer zusätzlichen akustischen Schwingung übertragen werden, welche sich im Raum ausbreitet (auch als zur Schallwelle bezeichnet). Die Quelle 502 des Störgeräuschs 501 kann beispielsweise eine Person (auch als Störer bezeichnet), ein Vorgang oder eine Vorrichtung sein. Die Quelle 502 des Störgeräuschs 501 (auch als Störquelle 502 bezeichnet) kann beispielsweise auch eine synthetische Quelle sein.

In dem dargestellten Beispiel kann die Störquelle 502 einen größeren Abstand von den mehreren Mikrofonen 104a, 104b, 104c aufweisen als die Eingabequelle 402. Das für dieses Beispiel Beschriebene kann allerdings auch in Analogie dazu gelten, dass die Eingabequelle 402 einen größeren Abstand von den mehreren Mikrofonen 104a, 104b, 104c aufweist als die Störquelle 502.

Beispielsweise kann die Störquelle 502 mittig hinter dem Benutzer 402 vor dem SB-Terminal 100 angeordnet sein.

Eine erste Wellenfront 501a des Störgeräuschs 501 erreicht die mehreren Mikrophone (links außen, mittig und rechts außen) beispielsweise im Wesentlichen gleichzeitig. Mit anderen Worten können die Laufzeitdifferenz und/oder die Schalldruckdifferenz zwischen den Mikrophonen außen und mittig geringer (bis hin zu idealerweise Null) sein, als für die Spracheingabe 401.

Anschaulich kann die Störquelle 502 weiter weg von dem Selbstbedienung-Terminal angeordnet sein als der Benutzer 402 des Selbstbedienung-Terminals und das erkannte Störsignal kann nun mittels Überlagerns der Audiosignale herausgefiltert werden, beispielsweise mittels einer invertierten Signalüberlagerung oder eines anderen Mechanismus zur Geräuschkompensation (auch als "Noise Canceling" bezeichnet).

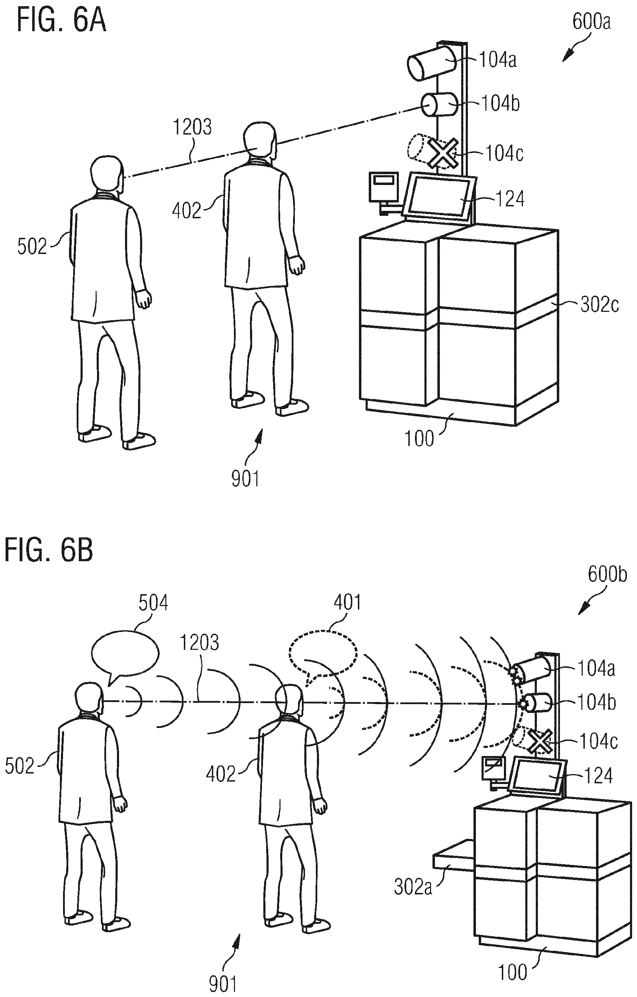

**Fig.6A und Fig.6B** veranschaulichen das SB-Terminal 100 in dem Verfahren 400 gemäß verschiedenen Ausführungsformen 600a, 600b in schematischen Perspektivansichten, z.B. mittels der Steuervorrichtung 106 implementiert. Wie dargestellt, können die mehreren Mikrophone 104a, 104b, 104c übereinander und/oder oberhalb der Produkterfassungsvorrichtung 102 angeordnet sein. Wie vorstehend beschrieben ist, kann ein drittes Mikrofon 104c optional sein (hier durch ein Kreuz dargestellt).

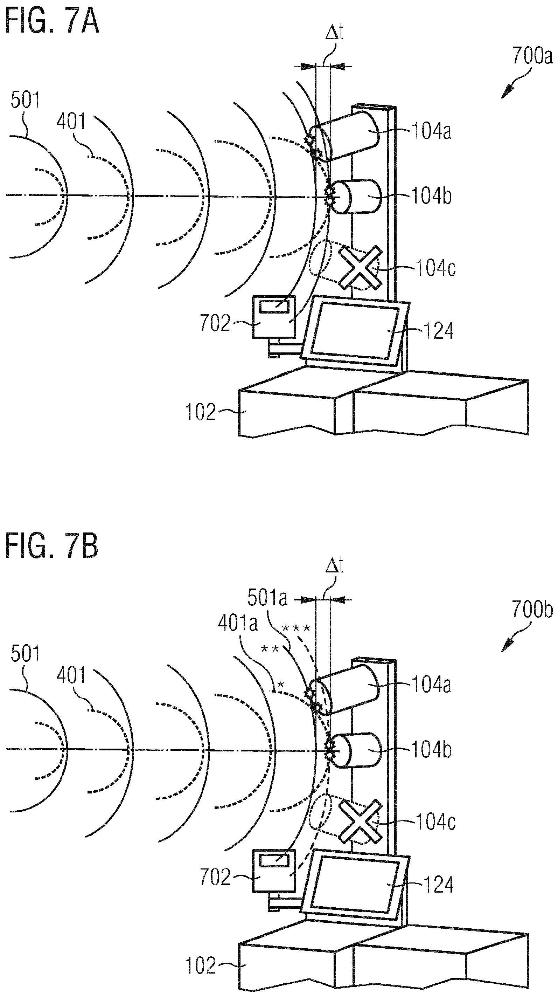

**Fig.7A und Fig.7B** veranschaulichen das SB-Terminal in dem Verfahren 400 gemäß verschiedenen Ausführungsformen 700a, 700b in schematischen Detailansichten, z.B. mittels der Steuervorrichtung 106 implementiert. Das SB-Terminal 100 kann optional eine Bezahlvorrichtung 702 aufweisen, z.B. eine EC-Lesevorrichtung 702.

Gemäß verschiedenen Ausführungsformen können die Mikrofone 104a, 104b einen identischen Abstand von dem Bedienbereich 901 bzw. von der Soll-Position aufweisen. Dies ermöglicht, dass die Spracheingabe 401 eine geringere oder keine Laufzeitdifferenz bzw. Schalldruckdifferenz aufweist, und erleichtert somit das Herausfiltern des Störgeräuschs 501.

Das Störgeräusch 501 (z.B. ein störendes Gespräch) kann zwei Mikrofone der mehreren Mikrofone 104a, 104b, 104c zu unterschiedlichen Zeitpunkten erreichen, was in der Laufzeitdifferenz Δt resultiert. Die Spracheingabe 401 kann hingegen kann die mehreren Mikrofone 104a, 104b, 104c gleichzeitig erreichen, z.B. zu einem ersten Zeitpunkt t = t₁, an dem die erste Wellenfront 501a des Störgeräuschs 501 das erste Mikrofon 104a erreicht. Die gestrichelte Linie repräsentiert die erste Wellenfront 501a des Störgeräuschs zu einem zweiten Zeitpunkt t₂ = t₁ + Δt, zu welchem dieses das zweite Mikrofon 104b erreicht.

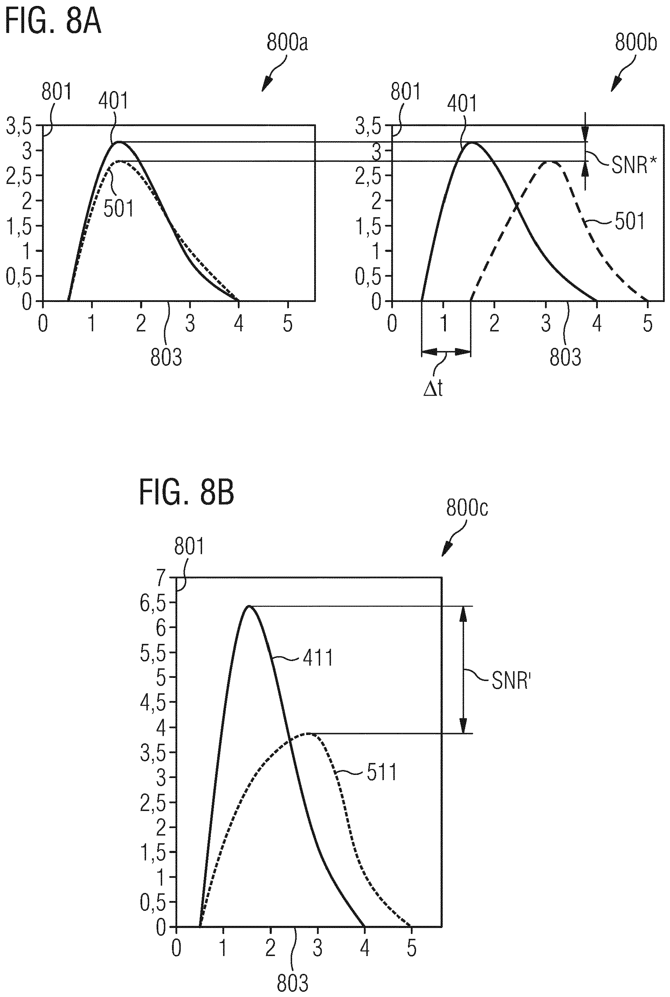

**Fig.8A und Fig.8B** veranschaulichen das Verfahren 400 gemäß verschiedenen Ausführungsformen in verschiedenen schematischen Diagrammen 800a, 800b, 800c, in denen eine akustische Größe 801 (z.B. der Schalldruck) über der Zeit 803 aufgetragen ist.

Das jeweilige akustische Signal (d.h. der Schall), der mittels des ersten akustischen Sensors 104a und des zweiten akustischen Sensors 104b erfasst wird (allgemeiner auch als Signalerfassen bezeichnet), weist die akustische Spracheingabe 401 (allgemeiner auch als Nutzsignal bezeichnet) und das Störgeräusch (auch als Störsignal bezeichnet) auf. In diesem Beispiel ist der Ort der Entstehung (d.h. der Ort der entsprechenden Quelle 402, 502) der Spracheingabe 401 bzw. des Störgeräuschs 501 derart, dass diese übereinstimmen in ihrem Abstand von dem ersten Sensor 104a und sich voneinander unterscheiden in ihrem Abstand von dem zweiten Sensor 104b. Ferner ist der Ort der Entstehung der Spracheingabe 401 (d.h. deren Ursprung) an der Fokus-Position der Mikrofone 104a, 104b angeordnet, so dass nur für das Störgeräusch 501 eine Laufzeitdifferenz Δt auftritt. Die jeweiligen Orte der Entstehung können im Allgemeinen aber auch anders angeordnet sein.

In Diagramm 800a ist eine mittels des ersten akustischen Sensors 104a erfasste akustische Spracheingabe 401 und ein mittels des ersten akustischen Sensors 104a erfasstes Störgeräusch 501 dargestellt. Die Spracheingabe 401 und das Störgeräusch 501 unterscheiden sich beispielsweise voneinander, z.B. in dem Ort ihrer Entstehung, in ihrem zeitlichen Verlauf und/oder in ihrem Scheitelwert. Der Unterschied im Scheitelwert wird auch als Störabstand (auch als SNR bezeichnet) bezeichnet.

In Diagramm 800b ist eine mittels des zweiten akustischen Sensors 104b erfasste akustische Spracheingabe 401 und ein mittels des zweiten akustischen Sensors 104b erfasstes Störgeräusch 501 dargestellt. Die Spracheingabe 401 und das Störgeräusch 501 unterscheiden sich hinsichtlich des zweiten akustischen Sensors 104b in ihrer Laufzeit, was als Laufzeitdifferenz Δt gekennzeichnet ist.

In Diagramm 800c ist das Resultat des Überlagerns des mittels des ersten akustischen Sensors 104a erfassten akustischen Signals (auch als erstes Messsignal bezeichnet) und des mittels des zweiten akustischen Sensors 104b erfassten akustischen Signals (auch als zweites Messsignal bezeichnet) dargestellt. Das Resultat des Überlagerns wird im Folgenden auch als Überlagerungssignal bezeichnet. In diesem Beispiel werden die erfassten akustischen Messsignale (z.B. deren Amplitude über dem Zeitverlauf) addiert.

Im Allgemeinen kann allerdings auch eine komplexere Abbildung verwendet werden, welche die erfassten akustischen Messsignale auf das Überlagerungssignal abbildet. Das Überlagerungssignal weist dann das zeitlich versetzt einander überlagerte Störgeräusch (auch als Störüberlagerung 511 bezeichnet) und die einander konstruktiv überlagerte Spracheingabe (auch als Eingabeüberlagerung 411 bezeichnet) auf.

Die Abbildung kann beispielsweise eine oder mehr als eine Transformation aufweisen, welche auf jedes der erfassten akustischen Messsignale angewendet wird. Beispiele für eine Transformationen können aufweisen: eine (z.B. zeitliche) Verschiebung, eine (z.B. zeitliche) Stauchung und/oder eine (z.B. zeitliche) Streckung. Die Abbildung kann beispielsweise eine oder mehr als eine Verknüpfung aufweisen, welche auf ein Paar der erfassten akustischen Messsignale angewendet wird. Beispiele für eine Verknüpfung weisen auf: eine Addition, eine Substruktion, eine Faltung, oder Ähnliches. Die Verknüpfung kann mehrstellig sein, z.B. zweitstellig oder mehr als zweitstellig.

Da der Scheitelwert der Spracheingabe 401 von beiden Sensoren im Wesentlichen zum selben Zeitpunkt t₁ = t₂ erfasst wird, wird deren Scheitelwert bei der Addition im Wesentlichen verdoppelt. Da der Scheitelwert des Störgeräuschs 401 von beiden Sensoren zu unterschiedlichen Zeitpunkten t₂ = t₁ + Δt erfasst wird, wird deren Scheitelwert bei der Addition nur unwesentlich verändert.

Der sich daraus ergebende Störabstand (SNR') der Eingabeüberlagerung 411 zu der der Störüberlagerung 511 ist größer als der Störabstand des ersten Messsignals und/oder der Störabstand des zweiten Messsignals.

In Ähnlicher Weise kann die Schalldruckdifferenz ausgenutzt werden, um den Störabstand mittels des Überlagerns zu vergrößern.

In diesem Beispiel war der Ort der Entstehung (d.h. der Ort der entsprechenden Quelle 402, 502) der Spracheingabe 401 und des Störgeräuschs 501 derart eingerichtet, dass diese denselben Abstand von dem ersten Sensor 104a und einen unterschiedlichen Abstand von dem zweiten Sensor 104b aufweisen. Im Allgemeinen können allerdings auch komplexere Konfigurationen berücksichtigt werden, wie nachfolgend näher erläutert wird.

Beispielsweise kann die Störquelle 502 mindestens den doppelten Abstand von dem SB-Terminal 100 (z.B. dessen Mikrofonen) angeordnet aufweisen als die Eingabequelle 402.

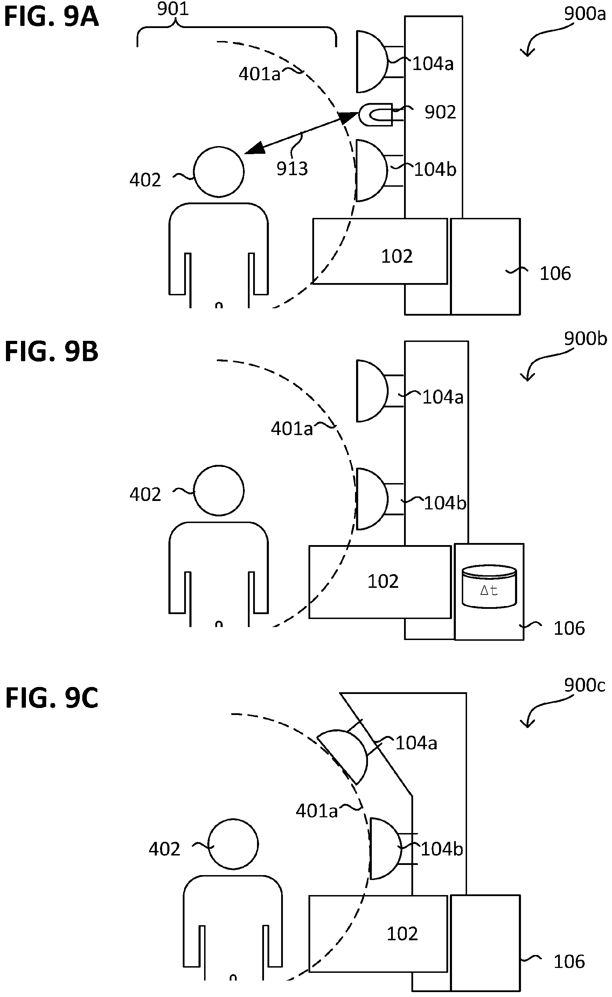

**Fig.9A, Fig.9B und Fig.9C** veranschaulichen das SB-Terminal 100 gemäß verschiedenen Ausführungsformen 900a, 900b, 900c in einer schematischen Seitenansicht, in denen der Bedienbereich 901 und ein exemplarischer Benutzer 402 darin veranschaulicht sind. Der Kopf des Benutzers als Eingabequelle 402 ist exemplarisch an einer Soll-Position in dem Bedienbereich 901 hinsichtlich der mehreren Mikrofone 104a, 104b angeordnet. Ferner ist eine Wellenfront 401a eingezeichnet, die einen äquidistanten Abstand von der Soll-Position aufweist.

Die Soll-Position kann beispielsweise einen Abstand von dem Untergrund aufweisen in einem Bereich von 1,5 m ungefähr bis ungefähr 2,5 m, z.B. ungefähr 2 m. Die Soll-Position kann beispielsweise einen Abstand von der Produkterfassungsvorrichtung 102 aufweisen in einem Bereich von 0,5 m ungefähr bis ungefähr 1 m.

Jeder der mehreren Sensoren 104a, 104b kann einen Abstand (auch als Sensorabstand bezeichnet) von dem Bedienbereich 901 aufweisen. Der Sensorabstand kann beispielsweise in einem Bereich von ungefähr 10% der Bedienreichweite bis ungefähr 1000% der Bedienreichweite sein.

In Ausführungsformen 900a und 900b unterscheiden sich die zwei Sensoren in ihrem Abstand von dem Benutzer 402 und/oder von der Soll-Position.

Das SB-Terminal gemäß der Ausführungsform 900a weist einen Abstandssensor 902 auf, welcher eingerichtet ist, einen Abstand 913 (auch als Quellenabstand 913 bezeichnet) von einem Objekt in dem Bedienbereich 901 zu erfassen, z.B. des Benutzers 402. Die Steuervorrichtung 106 kann eingerichtet sein, auf Grundlage des Quellenabstands 913 eine Laufzeitdifferenz zu ermitteln. Die Laufzeitdifferenz kann beispielsweise die Relation Δt = d_{Q}/c_{S} erfüllen, wobei d_{Q} den Quellenabstand 913 bezeichnet. Das erste Messsignal und das zweite Messsignal können um die Laufzeitdifferenz Δt zeitlich zueinander verschoben sein, wobei die zeitlich zueinander verschobenen Messsignale miteinander verknüpft (z.B. addiert) werden.

Im Allgemeinen kann der Abstandssensor 902 eingerichtet sein, ein Signal zu emittieren und dessen Reflexion zu erfassen. Beispiele für einen Abstandssensor 902 weisen auf: einen Licht-Abstandssensor 902 (z.B. Lichtreflexion ausnutzend) und/oder einen Schall-Abstandssensor 902 (z.B. Schallreflexion ausnutzend).

Das SB-Terminal 100 gemäß der Ausführungsform 900b, z.B. dessen Steuervorrichtung 106, weist einen Datenspeicher auf, in welchem eine vorgegebene Laufzeitdifferenz Δt abgespeichert ist. Die vorgegebene Laufzeitdifferenz Δt kann beispielsweise mittels einer Kalibration des SB-Terminals 100 ermittelt werden. Das erste Messsignal und das zweite Messsignal können um die Laufzeitdifferenz Δt zeitlich zueinander verschoben werden, wobei die zeitlich zueinander verschobenen Messsignale miteinander verknüpft (z.B. addiert) werden. In analoger Weise kann alternativ oder zusätzlich dazu die Amplitudendifferenz ermittelt und abgespeichert werden.

Das Kalibrieren kann aufweisen, dass eine Testsignalquelle am Ort der Soll-Position angeordnet wird und ein akustisches Testsignal emittiert, und dass eine Zeitdifferenz zwischen dem Erfassen des Testsignals mittels des ersten Mikrofons 104a und dem Erfassen des Testsignals mittels des zweiten Mikrofons 104a ermittelt wird. Die Zeitdifferenz kann dann als Laufzeitdifferenz Δt abgespeichert werden.

In Ausführungsformen 900a und 900b weisen die zwei Sensoren 104a, 104b denselben Abstand von dem Benutzer 402 und/oder der Soll-Position auf, d.h. deren Fokus-Position kann der Soll-Position entsprechen. Anschaulich sind die zwei Sensoren 104a, 104b auf die Soll-Position in dem Bedienbereich 901 ausgerichtet. In dem Fall kann die Laufzeitdifferenz Δt = 0 sein und die zwei Messsignale können ohne einen zeitlichen Versatz zueinander verknüpft werden.

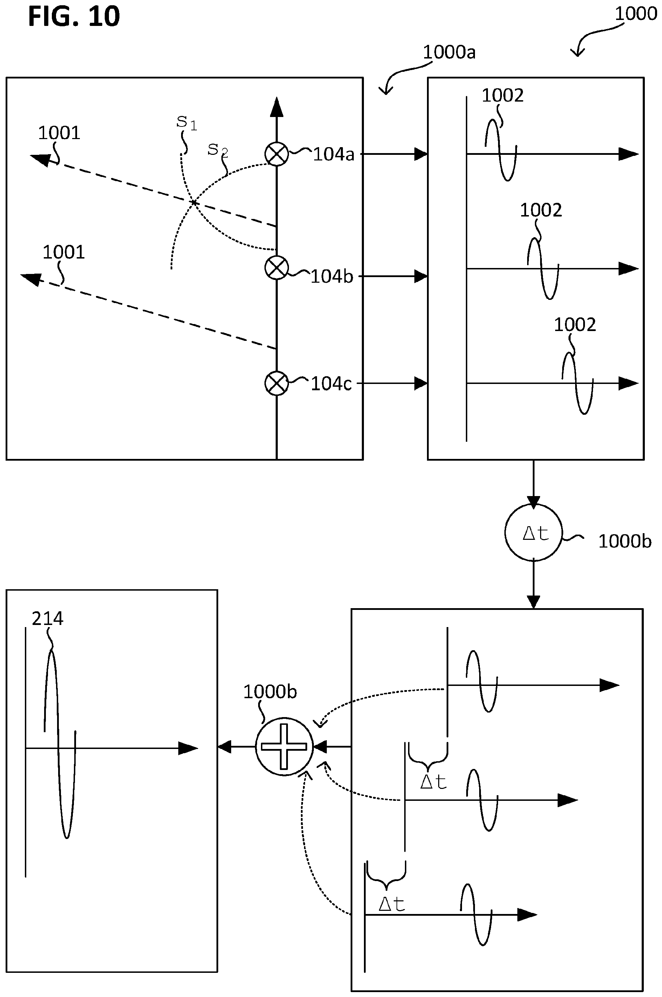

**Fig.10** veranschaulicht das Verfahren 400 gemäß verschiedenen Ausführungsformen 1000 in einem schematischen Ablaufdiagramm. In 1000a werden mittels der mehreren Mikrofone 104a, 104b, 104c mehrere Audiosignale 1002 zeitversetzt zueinander erfasst. In 1000b werden die Zeitachsen der erfassten Audiosignale 1002 zueinander zeitlich versetzt jeweils paarweise um dieselbe Laufzeitdifferenz Δt (auch als konstante Zeitkompensation bezeichnet). In 1000c werden die zeitkompensierten Audiosignale 1002 einander überlagert (z.B. summiert), so dass ein Überlagerungssignal 214 erhalten wird.

Für ein Paar (z.B. einander unmittelbar benachbarter) Mikrofone 104a, 104b (auch als Sensorpaar bezeichnet) werden diejenigen Signale konstruktiv einander überlagert, deren Ursprung die Relation Δs = Δt · c_{S} erfüllt, wobei Δs die Differenz der Abstände zu den Mikrofonen 104a, 104b bezeichnet. Beispielsweise kann Δs = s₁ - s₂ sein.

Die Relation Δs = Δt · c_{S} ist für unendlich viele Punkte auf einer Fläche 1001 (auch als Laufzeitdifferenzfläche 1001 bezeichnet) erfüllt. Die Punkte auf der Laufzeitdifferenzfläche 1001 erfüllen die Bedingung, dass ihr Abstand s₁ von dem ersten Mikrofon 104a und ihr Abstand s₂ von dem zweiten Mikrofon 104b die Relation Δt = t₁ - t₂ = s₁/c_{S} - s₂/c_{S} erfüllen, so dass s₁ - s₂ = Δt · c_{S} konstant ist. Dasselbe gilt für jedes andere Sensorpaar 104b, 104c. Damit können Störquellen, welche neben der Laufzeitdifferenzfläche 1001 liegen effektiv herausgefiltert werden, da deren Signale nicht mehr vollständig zeitkorrigiert sind und sich teilweise destruktiv überlagern. Diese konstante Zeitkompensation lässt sich sehr gut auf eine Schallquelle in großer Entfernung anwenden, d.h. deren Sensorabstand sₙ sehr viel größer ist als der Abstand der Sensoren eines Sensorpaars voneinander.

Ist der Sensorabstand sₙ hingegen geringer, wird eine angepasste Zeitkompensation der Audiosignale verwendet, wie nachfolgend genauer erläutert wird.

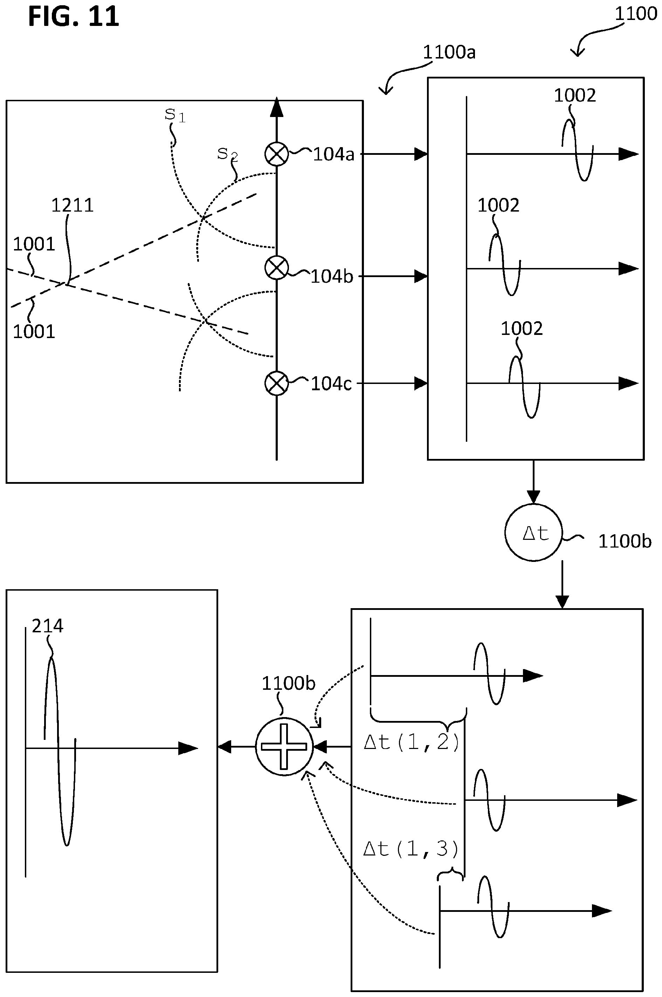

**Fig.11** veranschaulicht das Verfahren 400 gemäß verschiedenen Ausführungsformen 1100 in einem schematischen Ablaufdiagramm. In 1100a werden mittels der mehreren Mikrofone 104a, 104b, 104c mehrere Audiosignale 1002 zeitversetzt zueinander erfasst. In 1100b werden die Zeitachsen der erfassten Audiosignale 1002 zueinander zeitlich versetzt jeweils paarweise um eine angepasste Laufzeitdifferenz Δt (auch als angepasste Zeitkompensation bezeichnet). Dabei kann dem k-ten Sensorpaar, welches den n-ten Sensor und den m-ten Sensor aufweist, eine Laufzeitdifferenz Δt(m, n) zugeordnet sein, so dass sₘ - sₙ = Δt(m, n) · c_{S} ist. Dies erreicht, dass die Laufzeitdifferenzflächen 1001, welche sich für jedes Sensorpaar ergeben, einander schneiden, z.B. in einer Geraden. Dargestellt ist exemplarisch die Berechnung für Δt(m=1, n=2) und Δt(m=2, n=3). Im Resultat werden diejenige Störquellen, welche neben dem Schnitt 1211 der Laufzeitdifferenzflächen 1001 liegen effektiv herausgefiltert, da deren Signale nicht mehr vollständig zeitkorrigiert sind und sich teilweise destruktiv überlagern.

Somit wird ferner der Sensorabstand, den eine Schallquelle für eine konstruktive Überlagerung hat, eingegrenzt, z.B. zwischen einen maximalen und einen minimalen Abstand. Jedes Sensorpaar kann somit einen Freiheitsgrad für die Position der Schallquelle eliminieren. Bei drei Sensoren können somit drei Laufzeitdifferenzen Δt(m=1, n=2), Δt(m=1, n=3) und Δt(m=2, n=3) verwendet werden, so dass für die Schallquelle kein Freiheitsgrad übrig bleibt. Damit kann effektiv eine Tiefenfilterung bereitgestellt werden.

Derselbe Mechanismus der angepassten Zeitkompensation kann ebenso für weniger als drei oder mehr als drei Mikrofone verwendet werden. Beispielsweise kann alternativ oder zusätzlich der Schalldruck verwendet werden, um den Abstand der Schallquelle einzugrenzen. Aufgrund der quadratischen Abhängigkeit des Schalldrucks pₙ = pₙ(sₙ²) vom Abstand sₙ liegen die Orte einer Schallquelle, für welche eine konstruktive Überlagerung erfolgt, auf einer anders verlaufenden Fläche, so dass unter Verwendung der Schalldruckdifferenz ebenso ein Freiheitsgrad pro Sensorpaar eliminiert werden kann.

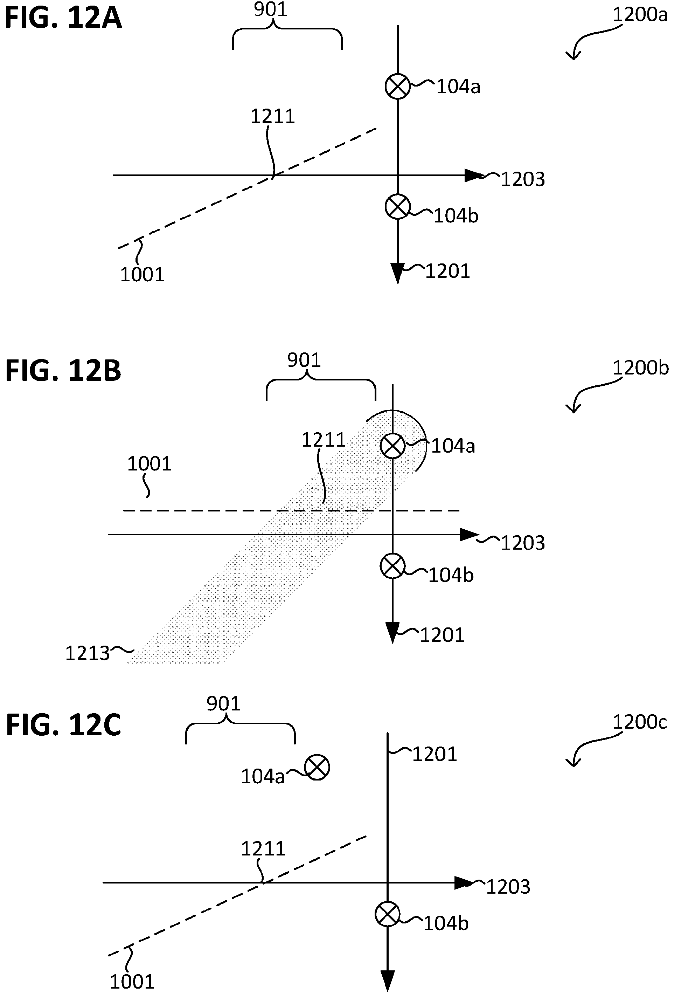

**Fig.12A** bis **Fig.12C** veranschaulichen jeweils ein SB-Terminal 100 gemäß verschiedenen Ausführungsformen 1200a, 1200b, 1200c in einer schematischen Seitenansicht mit Blickrichtung entlang einer horizontalen Ebene 1203. Die horizontale Ebene 1203 kann quer zu einer Gravitationsrichtung 1201 sein. Die horizontale Ebene 1203 kann einen Abstand von einem Untergrund, auf welchem das SB-Terminal 100 angeordnet ist, aufweisen, z.B. von mehr als ungefähr 1 m (z.B. ungefähr 1,5 m) und/oder weniger als ungefähr 3 m (z.B. ungefähr 2,5 m). Hinsichtlich der Ausführungsformen 1200a, 1200b, 1200c wird sich auf ein Paar Mikrofone 104a, 104b bezogen. Das Beschriebene kann allerdings auch für mehr als ein Paar Mikrofone 104a, 104b gelten, z.B. drei Mikrofone, die, wahlweise, in drei verschiedene Paare gruppiert werden können. Die Laufzeitdifferenzfläche 1001 kann zu derjenigen Laufzeitdifferenz Δt = t₁ - t₂ = s₁/c_{S} - s₂/c_{S} korrespondieren, gemäß welcher die Messsignale der Mikrofone 104a, 104b zeitversetzt einander überlagert werden. Signalbestandteile, deren Ursprung auf der Laufzeitdifferenzfläche 1001 liegen, werden somit mittels der Signalverarbeitung konstruktiv verstärkt.

In Ausführungsform 1200a kann die Laufzeitdifferenzfläche 1001 schräg zu der Gravitationsrichtung 1201 sein. Dies erreicht einen Schnitt 1211 zwischen der horizontalen Ebene 1203 und der Laufzeitdifferenzfläche 1001. Stehen nun mehrere ungefähr gleich große Personen hintereinander, wird nur der von derjenigen Person emittierte Schall konstruktiv verstärkt, deren Mund dem Schnitt 1211 zwischen der horizontalen Ebene 1203 und der Laufzeitdifferenzfläche 1001 möglichst nahe ist.

In Ausführungsform 1200b können die mehreren Mikrofone ein oder mehr als ein Richtmikrofon 104a aufweisen, dessen Richtwirkung schräg zu der Gravitationsrichtung 1201 und/oder der Laufzeitdifferenzfläche 1001 ist, z.B. auf die horizontale Ebene 1203 bzw. die Laufzeitdifferenzfläche 1001 ausgerichtet ist (auch als Richtwirkung 1213 bezeichnet). Dies erreicht einen Schnitt 1211 zwischen der Richtung der Richtwirkung 1213 und der Laufzeitdifferenzfläche 1001, auch wenn die Laufzeitdifferenzfläche 1001 beispielsweise im Wesentlichen parallel zu der horizontalen Ebene 1203 ist. Stehen nun mehrere ungefähr gleich große Personen hintereinander, wird nur der von derjenigen Person emittierte Schall konstruktiv verstärkt, deren Mund dem Schnitt 1211 zwischen der Richtwirkung 1213 und der Laufzeitdifferenzfläche 1001 möglichst nahe ist.

In Ausführungsform 1200c können die zwei Mikrofone 104a, 104b bezüglich der Gravitationsrichtung 1201 versetzt zueinander angeordnet sein. Mit anderen Worten kann eine Verbindungslinie zwischen diesen schräg zu der Gravitationsrichtung 1201 sein. Dies erreicht, dass die Laufzeitdifferenzfläche 1001 schräg zu der Gravitationsrichtung 1201 ist, selbst wenn Laufzeitdifferenz Δt = 0 gesetzt wird. Ist die Laufzeitdifferenz Δt = 0, so ist die Laufzeitdifferenzfläche 1001 mittig zwischen den zwei Mikrofonen 104a, 104b angeordnet und planar. Beispielsweise kann so die Fokus-Position auf dem Schnitt 1211 zwischen der Laufzeitdifferenzfläche 1001 und der horizontalen Ebene 1203 liegen.

Mittels der Ausführungsformen 1200a, 1200b, 1200c wird der Bereich, für den konstruktive Interferenz auftritt, somit in seinem Abstand von dem SB-Terminal 100 eingeengt, so dass hintereinander stehende Personen nicht identisch verstärkt werden.

Wird das SB-Terminal 100 kalibriert, kann die Position des Ursprungs eines Testsignals auf dem Schnitt 1211 angeordnet werden. Die darauf basierende Laufzeitdifferenz und/oder Amplitudendifferenz des Testsignals kann als Angabe abgespeichert werden, welche die Soll-Position einer Schallquelle ist (auch als Soll-Ursprung bezeichnet), die konstruktiv verstärkt werden soll.

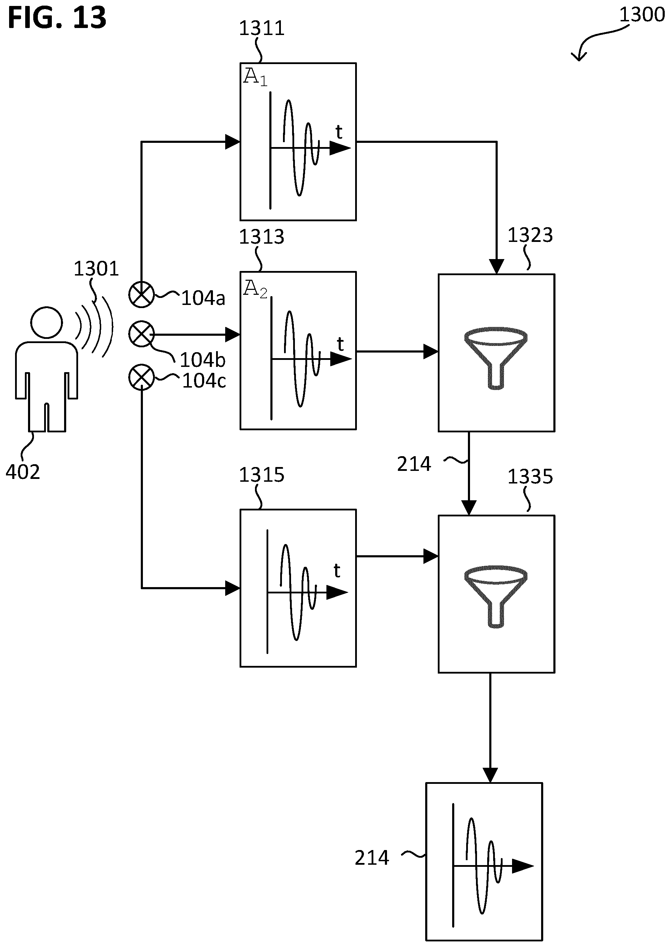

**Fig.13** veranschaulicht das Verfahren 400 gemäß verschiedenen Ausführungsformen 1300 in einem schematischen Ablaufdiagramm, welches beispielsweise mittels der Steuervorrichtung 106 implementiert ist. Mittels eines ersten Mikrofons 104a kann ein akustisches Signal 1301 in ein erstes Audiosignal 1311 überführt werden. Mittels eines zweiten Mikrofons 104a kann das akustische Signal 1301 in ein zweites Audiosignal 1313 überführt werden.

Das Überlagern kann aufweisen, das erste Audiosignal 1311 mittels eines ersten Filters 1323 auf ein Überlagerungssignal 214 abzubilden. Der erste Filter 1323 kann eine Funktion des zweiten Audiosignals 1311 sein. Beispielsweise kann das zweite Audiosignal 1311 auf den ersten Filter 1323 abgebildet werden.

Ein Filter F kann im Allgemeinen ein (z.B. elektrisches) Signal abhängig von einem Parameter P_{F} (auch als Filterparameter bezeichnet) in der Amplitude und/oder in der Phasenlage verändern. Als Filterparameter kann beispielsweise die Zeit oder die Amplitude gewählt werden. Der Filter bildet somit einen ersten zeitabhängigen Signalverlauf A₁(t) auf einen zweiten zeitabhängigen Signalverlauf G₂(t) ab, so dass F(A₁) = G₂ ist. Beispielsweise kann der Filter als Grad der Veränderung (z.B. Abschwächung oder Verstärkung) in Abhängigkeit des Filterparameters P_{F} formuliert werden, so dass die Ausgabe des Filters G₂(t) = F(A₁(t), P_{F}) ist. Die Abbildung, welche der Filter implementiert, kann beispielsweise eine Multiplikation oder aber auch eine Addition sein. Es kann verstanden werden, dass ein Filter mittels Software und/oder mittels Hardware implementiert werden kann. Es können selbstverständlich auch andere Filtertypen verwendet werden.

In einer wenig komplexen Implementierung kann als erster Filter 1323 eine Addition mit dem (optional normierten) Signalverlauf A₂(t) des zweiten Audiosignals 1313 verwendet werden. Der so erhaltene erste Filter 1323 kann beispielsweise einen zeitabhängigen Faktor A₂(t) angeben, um welchen jeder Amplitudenwert A₁(t) verändert wird. Somit kann beispielsweise G₂ = A₁(t) + A₂(t) sein. Allgemeiner gesprochen kann der Filter 1323 auf Grundlage des zweiten Audiosignals 1313 gebildet sein.

In analoger Weise kann, wenn vorhanden, mittels eines dritten Mikrofons 104c das akustische Signal 1301 in ein drittes Audiosignal 1315 überführt werden, welches auf einen zweiten Filter 1335 abgebildet wird. Der zweite Filter 1335 kann das zuvor erhaltene Überlagerungssignal 214 auf ein zusätzliches Überlagerungssignal 214 abbilden. Die so bereitgestellte Verarbeitungskette kann diejenigen Signalbestandteile verstärken, deren Ursprung nahe der Soll-Position ist, und/oder diejenigen Signalbestandteile abschwächen, deren Ursprung fern der Soll-Position ist.

Eines oder mehr als eines der Überlagerungssignale 214 kann dann dem Ermitteln des Sprachmusters zugeführt werden.

## Patentansprüche

1. Selbstbedienung-Terminal (100), aufweisend:
• eine Produkterfassungsvorrichtung (102) zum Erfassen einer Eigenschaft eines Produkts;
• mehrere akustische Sensoren (104a, 104b); und
• eine Steuervorrichtung (106), die eingerichtet ist zum:
Überlagern eines mittels eines ersten der mehreren akustischen Sensoren (104a, 104b) erfassten ersten Signals und eines mittels eines zweiten der mehreren akustischen Sensoren (104a, 104b) erfassten zweiten Signals;
Ermitteln eines Sprachmusters auf Grundlage des erhaltenen Überlagerungssignals;
Ausgeben einer Information basierend auf der Eigenschaft und auf dem Sprachmuster;
• wobei das Überlagern und eine relative Lage des ersten akustischen Sensors (104a, 104b) und des zweiten akustischen Sensors (104a, 104b) zueinander derart eingerichtet sind, dass erste Bestandteile des Überlagerungssignals relativ zu zweiten Bestandteilen des Überlagerungssignals abgeschwächt werden, wenn ein Ursprung der zweiten Bestandteile zwischen dem Selbstbedienung-Terminal (100) und einem Ursprung der ersten Bestandteile angeordnet ist.

2. Selbstbedienung-Terminal (100) gemäß Anspruch 1, wobei das Überlagern und eine relative Lage der mehreren akustischen Sensoren (104a, 104b) zueinander derart eingerichtet sind, dass die zweiten Bestandteile nur dann konstruktiv überlagert werden, wenn deren Ursprung nahe einem Soll-Ursprung angeordnet ist.

3. Selbstbedienung-Terminal (100) gemäß Anspruch 2, wobei die mehreren Sensoren (104a, 104b) übereinstimmen in ihrem Abstand von dem Soll-Ursprung.

4. Selbstbedienung-Terminal (100) gemäß Anspruch 2, wobei das Überlagern unter Berücksichtigung einer abgespeicherten Angabe, welche eine Position des Soll-Ursprungs (100) repräsentiert, erfolgt.

5. Selbstbedienung-Terminal (100) gemäß Anspruch 4, wobei die Angabe eine Laufzeitdifferenz und/oder eine Amplitudendifferenz aufweist.

6. Selbstbedienung-Terminal (100) gemäß einem der Ansprüche 1 bis 5, wobei die Information eine Zahlungsinformation ist.

7. Selbstbedienung-Terminal (100) gemäß einem der Ansprüche 1 bis 6, wobei das Überlagern aufweist, das jeweils mittels jedes der mehreren akustischen Sensoren (104a, 104b) erfasste Signal abzubilden auf ein zusätzliches Signal, welches dem Ermitteln eines Sprachmusters zugeführt wird.

8. Selbstbedienung-Terminal (100) gemäß einem der Ansprüche 1 bis 7, wobei der Ursprung der zweiten Bestandteile und der Ursprung der ersten Bestandteile auf einer Ebene liegen, wobei die Ebene quer zu einer Gravitationsrichtung ist.

9. Selbstbedienung-Terminal (100) gemäß einem der Ansprüche 1 bis 8, ferner aufweisend:
• eine elektronische Komponente, welche mit der Steuervorrichtung gekoppelt ist;
wobei die Steuervorrichtung (106) ferner eingerichtet ist zum
• Ermitteln einer Steuerinformation auf Grundlage des Sprachmusters; und
• Ansteuern der Komponente mittels der Steuerinformation.

10. Selbstbedienung-Terminal (100) gemäß Anspruch 9, wobei die Komponente eine Bezahlvorrichtung aufweist.

11. Selbstbedienung-Terminal (100) gemäß einem der Ansprüche 1 bis 10, wobei die Eigenschaft einen maschinenlesbaren Code aufweist.

12. Selbstbedienung-Terminal (100) gemäß einem der Ansprüche 1 bis 11, wobei zumindest zwei Sensoren (104a, 104b) der mehreren akustischen Sensoren (104a, 104b) übereinander angeordnet sind.

13. Selbstbedienung-Terminal (100) gemäß einem der Ansprüche 1 bis 12, wobei die Produkterfassungsvorrichtung (102) einen Bedienbereich (901) definiert, aus welchem heraus diese bedient werden kann, wobei der Ursprung der zweiten Bestandteile in dem Bedienbereich (901) angeordnet ist.

14. Verfahren zum Kalibrieren des Selbstbedienung-Terminals (100) gemäß einem der Ansprüche 1 bis 13, das Verfahren aufweisend:
• Erfassen eines Testsignals mittels der mehreren akustischen Sensoren (104a, 104b);
• Ermitteln einer Angabe, welche eine Position des Ursprungs des Testsignals relativ zu dem Selbstbedienung-Terminal (100) repräsentiert; und
• Abspeichern der Angabe mittels der Steuervorrichtung.

15. Verfahren (400) für ein Selbstbedienung-Terminal mit einer Produkterfassungsvorrichtung zum Erfassen einer Eigenschaft eines Produkts, aufweisend:
• Überlagern (705) eines mittels eines ersten mehrerer akustischer Sensoren (104a, 104b) erfassten Signals und eines mittels eines zweiten der mehreren akustischen Sensoren (104a, 104b) erfassten Signals;
• Ermitteln (403) eines Sprachmusters (214m) auf Grundlage des erhaltenen Überlagerungssignals;
• Ausgeben einer Information basierend auf der Eigenschaft und auf dem Sprachmuster;
• wobei das Überlagern (705) und eine relative Lage des ersten akustischen Sensors (104a, 104b) und des zweiten akustischen Sensors (104a, 104b) zueinander derart eingerichtet sind, dass erste Bestandteile des Überlagerungssignals relativ zu zweiten Bestandteilen des Überlagerungssignals abgeschwächt werden, wenn ein Ursprung der zweiten Bestandteile zwischen dem Selbstbedienung-Terminal (100) und einem Ursprung der ersten Bestandteile angeordnet ist.

## Claims

1. Self-service terminal (100) having:
• a product detection device (102) for detecting a property of a product;
• a plurality of acoustic sensors (104a, 104b); and
• a control device (106) that is configured to:
superimpose a first signal detected by means of a first one of the plurality of acoustic sensors (104a, 104b) and a second signal detected by means of a second one of the plurality of acoustic sensors (104a, 104b);
determine a speech pattern based on the superimposition signal obtained;
output information based on the property and the speech pattern;
• wherein the superimposition and a relative position of the first acoustic sensor (104a, 104b) and of the second acoustic sensor (104a, 104b) with respect to each other are configured such that first component parts of the superimposition signal are attenuated relative to second component parts of the superimposition signal if an origin of the second component parts is arranged between the self-service terminal (100) and an origin of the first component parts.

2. Self-service terminal (100) according to Claim 1, wherein the superimposition and a relative position of the plurality of acoustic sensors (104a, 104b) with respect to each other are configured such that the second component parts are superimposed constructively only when their origin is arranged near a target origin.

3. Self-service terminal (100) according to Claim 2, wherein the plurality of sensors (104a, 104b) correspond in terms of their distance from the target origin.

4. Self-service terminal (100) according to Claim 2, wherein the superimposition takes place taking into account a stored specification representing a position of the target origin (100).

5. Self-service terminal (100) according to Claim 4, wherein the specification has a propagation time difference and/or an amplitude difference.

6. Self-service terminal (100) according to one of Claims 1 to 5, wherein the information is payment information.

7. Self-service terminal (100) according to one of Claims 1 to 6, wherein the superimposition comprises mapping the signal respectively detected by means of each of the plurality of acoustic sensors (104a, 104b) to an additional signal which is supplied to the determination of a speech pattern.

8. Self-service terminal (100) according to one of Claims 1 to 7, wherein the origin of the second component parts and the origin of the first component parts are on a plane, wherein the plane is transverse to a direction of gravity.

9. Self-service terminal (100) according to one of Claims 1 to 8, further having:
• an electronic component coupled to the control device;
wherein the control device (106) is further configured to
• determine control information based on the speech pattern; and
• control the component using the control information.

10. Self-service terminal (100) according to Claim 9, wherein the component has a payment device.

11. Self-service terminal (100) according to one of Claims 1 to 10, wherein the property has a machine-readable code.

12. Self-service terminal (100) according to one of Claims 1 to 11, wherein at least two sensors (104a, 104b) of the plurality of acoustic sensors (104a, 104b) are arranged on top of each other.

13. Self-service terminal (100) according to one of Claims 1 to 12, wherein the product detection device (102) defines an operating area (901) from which it can be operated, wherein the origin of the second component parts is arranged in the operating area (901).

14. Method for calibrating the self-service terminal (100) according to one of Claims 1 to 13, the method comprising:
• detecting a test signal using the plurality of acoustic sensors (104a, 104b);
• determining a specification which represents a position of the origin of the test signal relative to the self-service terminal (100); and
• storing the specification using the control device.

15. Method (400) for a self-service terminal having a product detection device for detecting a property of a product, comprising:
• superimposing (705) a signal detected by means of a first one of a plurality of acoustic sensors (104a, 104b) and a signal detected by means of a second one of the plurality of acoustic sensors (104a, 104b);
• determining (403) a speech pattern (214m) based on the superimposition signal obtained;
• outputting information based on the property and the speech pattern;
• wherein the superimposition (705) and a relative position of the first acoustic sensor (104a, 104b) and of the second acoustic sensor (104a, 104b) with respect to each other are configured such that first component parts of the superimposition signal are attenuated relative to second component parts of the superimposition signal if an origin of the second component parts is arranged between the self-service terminal (100) and an origin of the first component parts.

## Revendications

1. Borne en libre-service (100) comprenant :
• un dispositif (102) de détection de produit pour détecter une caractéristique d'un produit ;
• une pluralité de capteurs acoustiques (104a, 104b) ; et
• un dispositif de commande (106) qui est conçu pour :
superposer un premier signal détecté par un premier capteur parmi la pluralité de capteurs acoustiques (104a, 104b) et un deuxième signal détecté par un deuxième capteur parmi la pluralité de capteurs acoustiques (104a, 104b) ;
déterminer un modèle vocal sur la base du signal superposé obtenu ;
émettre une information sur la base de la caractéristique et du modèle vocal ;
• la superposition et la position relative du premier capteur acoustique (104a, 104b) et du deuxième capteur acoustique (104a, 104b) l'un par rapport à l'autre sont établies de telle sorte que des premières composantes du signal superposé sont atténuées par rapport à des deuxièmes composantes du signal superposé lorsqu'une origine des deuxièmes composantes est agencée entre le terminal en libre-service (100) et une origine des premières composantes.

2. Borne en libre-service (100) selon la revendication 1, dans lequel la superposition et une position relative de la pluralité de capteurs acoustiques (104a, 104b) les uns par rapport aux autres sont établies de telle sorte que les deuxièmes composantes ne sont superposées de manière constructive que lorsque leur origine est agencée à proximité d'une origine de référence.

3. Borne en libre-service (100) selon la revendication 2, dans laquelle les capteurs de la pluralité de capteurs (104a, 104b) concordent en ce qui concerne leur distance par rapport à l'origine de référence.

4. Borne en libre-service (100) selon la revendication 2, dans laquelle la superposition s'effectue en tenant compte d'une indication mémorisée qui représente une position de l'origine de référence (100).

5. Borne en libre-service (100) selon la revendication 4, dans laquelle l'indication comprend une différence de temps de propagation et/ou une différence d'amplitude.

6. Borne en libre-service (100) selon l'une des revendications 1 à 5, dans laquelle l'information est une information de paiement.

7. Borne en libre-service (100) selon l'une des revendications 1 à 6, dans laquelle la superposition comprend la mise en correspondance du signal détecté par chacun des capteurs de la pluralité de capteurs acoustiques (104a, 104b) avec un signal supplémentaire qui est transmis pour déterminer un modèle vocal.

8. Borne en libre-service (100) selon l'une des revendications 1 à 7, dans laquelle l'origine des deuxièmes composants et l'origine des premiers composants se trouvent sur un plan, le plan étant transversal à une direction de gravité.

9. Borne en libre-service (100) selon l'une des revendications 1 à 8, comprenant en outre :
• un composant électronique qui est relié au dispositif de commande ;
le dispositif de commande (106) étant en outre conçu pour
• déterminer une information de commande sur la base du modèle vocal ; et
• commander le composant au moyen de l'information de commande.

10. Borne en libre-service (100) selon la revendication 9, dans laquelle le composant comprend un dispositif de paiement.

11. Borne en libre-service (100) selon l'une des revendications 1 à 10, dans laquelle la caractéristique comprend un code lisible par machine.

12. Borne en libre-service (100) selon l'une des revendications 1 à 11, dans lequel au moins deux capteurs (104a, 104b) parmi la pluralité de capteurs acoustiques (104a, 104b) sont agencés l'un au-dessus de l'autre.

13. Borne en libre-service (100) selon l'une des revendications 1 à 12, dans laquelle le dispositif (102) de détection de produit définit une zone de commande (901) à partir de laquelle il est apte à être commandé, l'origine des deuxièmes composants étant agencée dans la zone de commande (901).

14. Procédé d'étalonnage de la borne en libre-service (100) selon l'une des revendications 1 à 13, le procédé comprenant :
• la détection d'un signal de test au moyen de la pluralité de capteurs acoustiques (104a, 104b) ;
• la détermination d'une indication représentant une position de l'origine du signal de test par rapport à la borne en libre-service (100) ; et
• la mémorisation de l'indication au moyen du dispositif de commande.

15. Procédé (400) pour une borne en libre-service avec un dispositif de détection de produit pour détecter une caractéristique d'un produit, comprenant :
• le fait (705) de superposer un signal détecté au moyen d'un premier capteur parmi une pluralité de capteurs acoustiques (104a, 104b) et un signal détecté au moyen d'un deuxième capteur parmi la pluralité de capteurs acoustiques (104a, 104b) ;
• le fait (403) de déterminer un modèle vocal (214m) sur la base du signal superposé obtenu ;
• le fait d'émettre une information basée sur la caractéristique et sur le modèle vocal ;
• la superposition (705) et une position relative du premier capteur acoustique (104a, 104b) et du deuxième capteur acoustique (104a, 104b) l'un par rapport à l'autre sont établies de telle sorte que les premières composantes du signal superposé sont atténuées par rapport aux deuxièmes composantes du signal superposé lorsqu'une origine des deuxièmes composantes est disposée entre la borne en libre-service (100) et une origine des premières composantes.
